# EUROPEAN PATENT APPLICATION

(11) **EP 4 250 077 A1**
(43) Date of publication of application: **27.09.2023**
(21) Application number: 21905520.9
(22) Date of filing: 30.11.2021
(51) Int. Cl.: G06F 3/0481

(54) **SPACE MANAGEMENT METHOD AND APPARATUS, AND ELECTRONIC DEVICE AND READABLE STORAGE MEDIUM**

(30) Priority: 15.12.2020 CN 202011473751
(71) Applicant: Huawei Technologies Co., Ltd., Shenzhen, Guangdong 518129 (CN)
(72) Inventor: CAO, Xuedong, Shenzhen, Guangdong 518129 (CN)
(74) Representative: Huawei European IPR
(86) International application number: PCT/CN2021/134615
(87) International publication number: WO 2022/127591

(57) **Abstract**

This application relates to the field of electronic technologies, and provides a space management method, an apparatus, an electronic device, and a readable storage medium. The electronic device may be a mobile phone, a tablet computer, a wearable device, a vehicle-mounted device, or the like. The method includes: displaying a first user interface, where the first user interface includes an identifier of a first object, and the first object is stored in a first user space; receiving a first operation; in response to the first operation, displaying a second user interface, where the second user interface includes a first area and a second area, the second area is used to display content stored in a second user space, the first user space and the second user space are user spaces of a same device, and the first area includes the identifier of the first object; receiving a second operation, where the second operation is an operation performed on the identifier of the first object; and in response to the second operation, moving the first object or data of the first object to the second user space. The foregoing method can improve cross-space data sharing efficiency.

## Description

This application claims priority to Chinese Patent Application No. 202011473751.7, filed with the China National Intellectual Property Administration on December 15, 2020 and entitled "SPACE MANAGEMENT METHOD, APPARATUS, ELECTRONIC DEVICE, AND READABLE STORAGE MEDIUM", which is incorporated herein by reference in its entirety.

### TECHNICAL FIELD

This application relates to the field of electronic technologies, and specifically, to a space management method, an apparatus, an electronic device, and a readable storage medium.

### BACKGROUND

With continuous development of multi-user technologies, a user uses a private space and a multi-user space more frequently. For example, the user usually stores some private information in the private space, or installs some applications with high security requirements in the private space.

When the user uses data of the private space in a main space, cross-space data sharing between the main space and the private space is required. Generally, cross-space data sharing means that the user needs to manually perform an operation on a terminal device, a setting interface is first entered in the private space, data that needs to be sent is selected, and then a switching operation is performed between the private space and the main space, to complete cross-space data sharing.

However, a conventional cross-space data sharing operation manner is cumbersome, resulting in low data sharing efficiency.

### SUMMARY

This application provides a space management method, to improve cross-space data sharing efficiency.

According to a first aspect, a space management method is provided, including: displaying a first user interface, where the first user interface includes an identifier of a first object, and the first object is stored in a first user space; receiving a first operation; in response to the first operation, displaying a second user interface, where the second user interface includes a first area and a second area, the second area is used to display content stored in a second user space, the first user space and the second user space are user spaces of a same device, and the first area includes the identifier of the first object; receiving a second operation, where the second operation is an operation performed on the identifier of the first object; and in response to the second operation, moving the first object or data of the first object to the second user space.

The method may be performed by a terminal device or a chip in a terminal device. The first user space and the second user space each may be a main space, a private space, or a different guest space on a same device, that is, any two different user spaces in a multi-user space. The first area may be used to display the first user interface. The first user interface is an interface of the first user space and includes content stored in the first user space. The second area may be used to display the content stored in the second user space. Optionally, the first user interface and the second user interface in this embodiment of this application may be interfaces displayed on a display of a conventional terminal device, or may be virtual reality interfaces. This is not limited in this application. The first object may include a file, for example a document file, a video file, an audio file, or a compressed package file, and may further include an application, or authorization information of an application, to-be-decoded data, or the like. Optionally, the second operation may be an operation performed on the identifier of the first object between the first area and the second area, for example, an operation of dragging the identifier of the first object in the first area to the second area, or may be sequentially tapping the first object in the first area, and a blank area or an icon of an app in the second area, or an operation in another form, as long as the first object in the first user space can point to an interface of the second user space displayed in the second area. A specific form of the second operation is limited in this embodiment of this application.

In the method, the user may input the first operation on the terminal device, and correspondingly display the interfaces of the first user space and the second user space in the first area and the second area respectively, to obtain the second user interface through split-screen display. Such split-screen display can avoid a user from repeatedly switching interfaces to compare differences between objects displayed in different spaces, so that the user can intuitively compare and observe the two spaces. Then, based on the second operation that is input by the user and that is for the identifier of the first object, the terminal device can send the first object or the data of the first object from the first user space to the second user space, thereby avoiding a cumbersome operation of repeatedly switching between different spatial interfaces to perform data sharing, and improving cross-space data sharing efficiency.

Optionally, a manner of data transmission between the first user space and the second user space may be a manner of transmission between virtual spaces, for example, a socket (socket) mode. In this method, a data transmission speed is high, and is not limited by a data type. Compared with a conventional manner of sharing a media type file by using a global variable, this manner can implement data sharing of various types, has more abundant functions, and has a wider application scenario.

Optionally, the first operation includes: starting a space management application app on the first user interface, and performing an operation on an icon of the second user space on an interface of the space management app; or sliding from a side of a screen to a middle of the screen on the first user interface to start an application bar, and performing an operation on an icon of the second user space in the application bar; or performing an operation on a shortcut button, where the shortcut button is one button or a combination of a plurality of buttons.

In this embodiment, the first operation may include: starting the space management application app on the first user interface, and performing the operation on the icon of the second user space on the interface of the space management app. For example, the space management app is opened on the first user interface, and the icon corresponding to the second user space in the space management app is tapped; and the terminal device can select the second user space by the user starting the space management app and operating the space management app. The method is easy to implement, a convenient operation on a plurality of user spaces can be conveniently implemented by using the space management app. The first operation may alternatively include: sliding from the side of the screen to the middle of the screen on the first user interface to start the application bar, and performing an operation on an icon of the second user space in the application bar. In this manner, the terminal device can start the quickly started application bar, and quickly select the second user space by using the application bar, so that an operation in the second user space is more convenient. The first operation may alternatively include: performing the operation on the shortcut button on the first user interface. The shortcut button corresponds to the second user space, for example, the second user space can be entered or selected by using the shortcut button. The shortcut button is one button or a combination of the plurality of buttons, or may be set by the user based on use portability, and it is more convenient to enter or select the second user space by using the shortcut button corresponding to the second user space.

Optionally, the first object is a first application app, and the identifier of the first object is an icon of the first app. The moving the first object or data of the first object to the second user space includes: sending an installation resource of the first app to the second user space, and installing the first app in the second user space.

The first app may be an instant messaging app, a player app, a browser app, or the like. When the user moves the icon of the first app in the first area from the first area to the second area corresponding to the second user space, for example, may move to the blank area of the second area, the terminal device sends the installation resource (that is, the data of the first object) of the first app to the second user space in response to the second operation of the movement, and installs the first app in the second user space. For example, the second user space can perform cross-space application twinning on the first app based on the obtained installation resource. In this method, an existing resource of the terminal device is fully utilized. Compared with a conventional complex processing process in which an Android package (Android package, APK) needs to be re-downloaded and re-parsed when an app is installed in another space and a dependency on a network, this method makes an app installation operation more convenient and installation efficiency higher.

Optionally, the first object is a first application app, and the identifier of the first object is an icon of the first app. The moving the first object or data of the first object to the second user space includes: sending data of the first app to a second app in the second user space, to enable the second app to obtain the data of the first app.

The first object app may alternatively be a first app having a relatively high security requirement, and the second app is an app having a correspondence. For example, when the first app is a payment app, the data of the first app may be payment authorization information, the second app may be a shopping app, and a user interface (user interface, UI) of the second app may be a payment page of the shopping app. When the first app is a private album, the data of the first app may be a private picture or a private video in the private album, the second app may be a picture browser or a player, and the UI of the second app may be a browsing interface of the picture browser or a playing interface of the player.

When the user moves the icon of the first app in the first area to the UI that stores the second app and that is in the second area corresponding to the second user space, the terminal device sends the data of the first app to the second user space based on the second operation of the movement, thereby avoiding data leakage that may be caused by performing data exchange in the user space in a conventional technology in a memory sharing manner, and further improving user data security.

Optionally, the first object is a file, and the identifier of the first object is an icon of the file. The moving the first object or data of the first object to the second user space includes: sending the file to the second user space for storage.

The file may include but is not limited to files of various types such as a picture, a video, audio, a document, and an Android package. When the first object is a to-be-shared file, the user moves the icon of the file from the first area to the second area corresponding to the second user space. In response to the second operation of moving the icon of the file by the user, the terminal device sends the file from the first user space to the second user space. In the method, in a file sharing process, an operation of exiting the current user space does not need to be performed, thereby improving cross-space file sharing efficiency.

Optionally, when the first user space is a main space, the second user space is a private space or a guest space; or when the first user space is a private space, the second user space is a main space or a guest space.

In this embodiment, data sharing between any two different user spaces of the main space and the private space, the main space and the guest space, or the guest space and the private space can be implemented, and application scenarios are more diversified.

Optionally, the method further includes: receiving a third operation; in response to the third operation, displaying a third user interface, where the third user interface includes the first area and a third area, the third area includes content stored in a third user space, and the third user space and the first user space are user spaces of different devices; receiving a fourth operation; and in response to the fourth operation, moving the first object to the third user space, where the fourth operation is an operation of moving the identifier of the first object from the first area to the third area; or in response to the fourth operation, moving a second object to the first user space, where the fourth operation is an operation of moving an identifier of the second object from the third area to the first area.

The third operation is an operation of displaying the third user space of an external device and the first user space of the terminal device through screen splitting. The user may open an interface of the third user space of the external device by using a space management app, and the terminal device displays, based on the third operation, user spaces of different devices through screen splitting, to obtain the third user interface. The fourth operation may be an operation of the user dragging the icon of the first object to the third area. In response to the fourth operation, the terminal device may move the first object or the data of the first object from the first user space to the third user space, that is, share the first object or the data of the first object from the terminal device to another external device. The fourth operation may alternatively be an operation of the user dragging the icon of the second object in the third user space to the first area. In response to the fourth operation, the terminal device may move the second object or data of the second object from the third user space to the first user space, that is, share the second object or the data of the second object from another external device to the terminal device.

When the first user space and the third user space are user spaces of different devices, for example, the first user space is a main space of a smartphone, and the third user space is a space of a smart band or another external device, file transmission may be performed in a short-distance wireless transmission manner, for example, a file is transmitted in a manner such as Wi-Fi or Bluetooth. In the method, the terminal device displays two spaces of different devices through screen splitting, and implements cross-device file transmission in the short-distance wireless transmission manner by performing simple and convenient operations on space interfaces of two devices obtained through screen splitting display, thereby effectively improving operation efficiency and transmission efficiency of file transmission between different devices.

Optionally, the first user space and the second user space are logged in with different passwords. When login to the second user space succeeds, the user is granted permission to reset the password of the first user space; or when login to the second user space fails, a security information check is performed on the second user space, and when the security information check succeeds, the user is granted permission to reset the password of the first user space, where security information includes information stored in the second user space.

For example, the first user space is a main space, and the second user space may be a private space with a higher security level of a same device. Generally, the first user space and the second user space may be logged in with different passwords. If the user forgets the user password of the first user space, and consequently cannot normally enter the first user space, the terminal device may check, when the second user space can be normally entered, security information input by the user in the second user space. If the user forgets the passwords of the first user space and the second user space, the security information may be further checked. The security information may include the information stored in the second user space, for example, an application corresponding to a file, a file storage time, and semantics. If the security information check succeeds, the terminal device provides, in the second user space or the guest space, the permission to reset the password of the first user space, for example, displays a password resetting interface, and enters the first user space based on a new password input by the user, so that the user obtains access permission for the first user space by using the reset password. The method avoids inconvenience caused by a need to restore factory settings to clear a password when the password is lost, and resets, via a security information check, a password of a space in which the password is forgotten. This makes resetting of the password of the space more convenient and quicker on the premise of ensuring data security.

According to a second aspect, a space management apparatus is provided, including a unit including software and/or hardware. The unit is configured to perform any method in the technical solutions according to the first aspect.

According to a third aspect, an electronic device is provided, including a processor and a memory. The memory is configured to store a computer program, and the processor is configured to invoke and run the computer program from the memory, so that the electronic device performs the following steps: displaying a first user interface, where the first user interface includes an identifier of a first object, and the first object is stored in a first user space; receiving a first operation; in response to the first operation, displaying a second user interface, where the second user interface includes a first area and a second area, the second area is used to display content stored in a second user space, the first user space and the second user space are user spaces of a same device, and the first area includes the identifier of the first object; receiving a second operation, where the second operation is an operation performed on the identifier of the first object; and in response to the second operation, moving the first object or data of the first object to the second user space.

Optionally, the first operation includes: starting a space management application app on the first user interface, and performing an operation on an icon of the second user space on an interface of the space management app; or sliding from a side of a screen to a middle of the screen on the first user interface to start an application bar, and performing an operation on an icon of the second user space in the application bar; or performing an operation on a shortcut button, where the shortcut button is one button or a combination of a plurality of buttons.

Optionally, the first object is a first application app, and the identifier of the first object is an icon of the first app. The electronic device specifically performs the following steps: sending an installation resource of the first app to the second user space, and installing the first app in the second user space.

Optionally, the first object is a first application app, and the identifier of the first object is an icon of the first app. The electronic device specifically performs the following step: sending data of the first app to a second app in the second user space, to enable the second app to obtain the data of the first app.

Optionally, the first object is a file, and the identifier of the first object is an icon of the file. The electronic device specifically performs the following step: sending the file to the second user space for storage.

Optionally, when the first user space is a main space, the second user space is a private space or a guest space; or when the first user space is a private space, the second user space is a main space or a guest space.

Optionally, the first user space and the second user space are logged in with different passwords, and the electronic device further performs the following steps: when login to the second user space succeeds, granting a user permission to reset the password of the first user space; or when login to the second user space fails, performing a security information check on the second user space, and when the security information check succeeds, granting a user permission to reset the password of the first user space, where security information includes information stored in the second user space.

Optionally, the electronic device further performs the following steps: receiving a third operation; in response to the third operation, displaying a third user interface, where the third user interface includes the first area and a third area, the third area includes content stored in a third user space, and the third user space and the first user space are user spaces of different devices; receiving a fourth operation; and in response to the fourth operation, moving the first object to the third user space, where the fourth operation is an operation of moving the identifier of the first object from the first area to the third area; or in response to the fourth operation, moving a second object to the first user space, where the fourth operation is an operation of moving an identifier of the second object from the third area to the first area.

According to a fourth aspect, a computer-readable storage medium is provided. The computer-readable storage medium stores a computer program, and when the computer program is executed by a processor, the processor is enabled to perform any method in the technical solutions according to the first aspect.

According to a fifth aspect, a computer program product is provided. The computer program product includes computer program code, and when the computer program code is run on an electronic device, the electronic device is enabled to perform any method in the technical solutions according to the first aspect.

### BRIEF DESCRIPTION OF DRAWINGS

FIG. 1 is a schematic diagram of a structure of a terminal device 100 according to an embodiment of this application;
FIG. 2 is a block diagram of a software structure of a terminal device 100 according to an embodiment of this application;
FIG. 3 is a schematic diagram of multi-dimensional space data exchange according to an embodiment of this application;
FIG. 4 is a schematic diagram of an interface operation of entering a space management app according to an embodiment of this application;
FIG. 5 is another schematic diagram of an interface operation of entering a space management app according to an embodiment of this application;
FIG. 6 is another schematic diagram of an interface operation of entering a space management app according to an embodiment of this application;
FIG. 7 is a diagram of an interface on which a space management app displays two spaces through screen splitting according to an embodiment of this application;
FIG. 8 is a schematic diagram of an interface operation of exiting a space management app according to an embodiment of this application;
FIG. 9 is a schematic diagram of an interface operation of performing application sharing between a private space and a main space according to an embodiment of this application;
FIG. 10 is a diagram of an interface obtained after application sharing according to an embodiment of this application;
FIG. 11 is another schematic diagram of an interface operation of performing application sharing between a private space and a main space according to an embodiment of this application;
FIG. 12 is another diagram of an interface obtained after application sharing according to an embodiment of this application;
FIG. 13 is a flowchart of performing application sharing between a private space and a main space according to an embodiment of this application;
FIG. 14 is a diagram of an interface of popping up a prompt dialog box during application sharing according to an embodiment of this application;
FIG. 15 is another flowchart of performing application sharing between a private space and a main space according to an embodiment of this application;
FIG. 16 is a schematic diagram of an interface operation of performing data sharing between a private space and a main space according to an embodiment of this application;
FIG. 17 is a schematic diagram of an interface obtained after file sharing is completed according to an embodiment of this application;
FIG. 18 is a schematic diagram of an interface operation of sharing a video file according to an embodiment of this application;
FIG. 19 is a schematic diagram of an interface obtained after video file sharing is completed according to an embodiment of this application;
FIG. 20 is a flowchart of performing file sharing between a private space and a main space according to an embodiment of this application;
FIG. 21 is a schematic diagram of an interface of popping up a prompt dialog box during file sharing according to an embodiment of this application;
FIG. 22 is another schematic diagram of an interface of popping up a prompt dialog box during file sharing according to an embodiment of this application;
FIG. 23 is another method flowchart of performing data sharing between a private space and a main space according to an embodiment of this application;
FIG. 24 is a diagram of an interface on which user spaces of a terminal device and another external device are displayed through screen splitting according to an embodiment of this application;
FIG. 25 is a schematic diagram of an interface operation of performing data sharing between a terminal device and an external device according to an embodiment of this application;
FIG. 26 is a flowchart of cross-device data sharing according to an embodiment of this application;
FIG. 27 is a method flowchart of performing data sharing between a private space and an external device according to an embodiment of this application;
FIG. 28 is a schematic diagram of an interface operation of performing payment authorization between a private space and a main space according to an embodiment of this application;
FIG. 29 is a schematic diagram of an interface of performing payment authorization between a private space and a main space according to an embodiment of this application;
FIG. 30 is another flowchart of performing payment authorization between a private space and a main space according to an embodiment of this application;
FIG. 31 is a schematic diagram of an interface operation of decoding a video file by using a player in a main space according to an embodiment of this application;
FIG. 32 is a schematic diagram of an interface of displaying a main space password setting option in a private space according to an embodiment of this application;
FIG. 33 is a schematic diagram of an interface of resetting a main space password in a private space according to an embodiment of this application;
FIG. 34 is a schematic diagram of a password protection question template according to an embodiment of this application;
FIG. 35 is a flowchart of resetting a main space password according to an embodiment of this application;
FIG. 36 is a flowchart of a space management method according to an embodiment of this application; and
FIG. 37 is a schematic diagram of a structure of a space management apparatus according to an embodiment of this application.

### DESCRIPTION OF EMBODIMENTS

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

A space management method provided in embodiments of this application may be applied to a terminal device, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

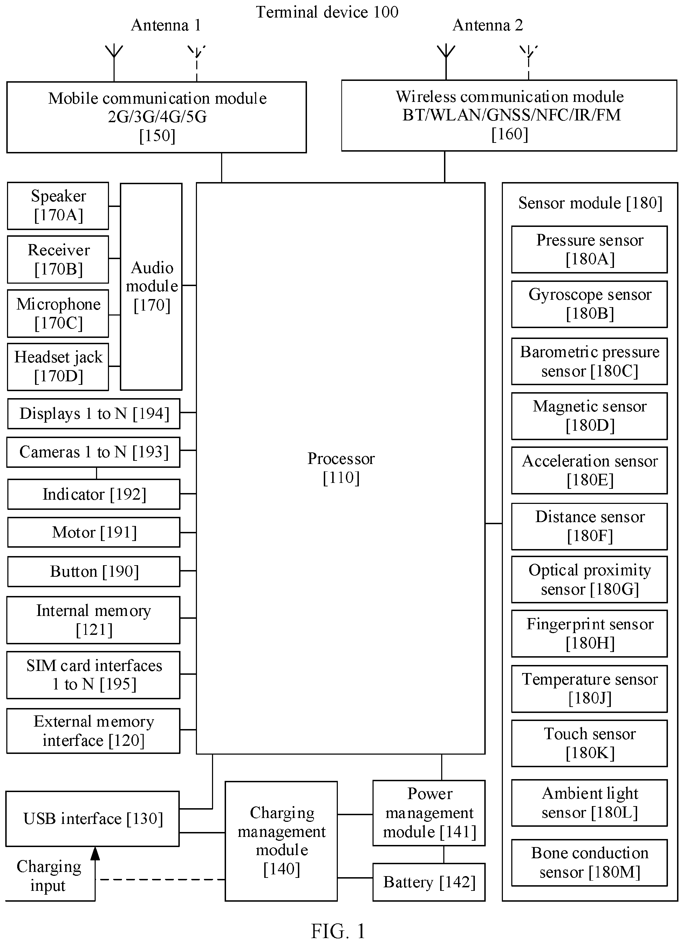

For example, FIG. 1 is a schematic diagram of a structure of a terminal device 100 according to an embodiment of this application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on an instruction operation code and a time sequence signal, to complete control of instruction fetching and instruction executing.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be used to perform audio communication, and sample, quantize, and code an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 and a peripheral device such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image photographing function of the terminal device 100. The processor 110 communicates with the display 194 through the DSI interface, to implement a display function of the terminal device 100.

The GPIO interface may be configured by software. The GPIO interface may be configured as a control signal or a data signal. In some embodiments, the GPIO interface may be configured to connect the processor 110 and the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect the charger to charge the terminal device 100, or may be configured to perform data transmission between the terminal device 100 and a peripheral device, or may be configured to connect a headset for playing audio through by using the headset. The interface may alternatively be configured to connect another terminal device, for example, an AR device.

It can be understood that an interface connection relationship between the modules illustrated in this embodiment of this application is merely an example for description, and does not constitute a limitation on the structure of the terminal device 100. In some other embodiments of this application, the terminal device 100 may alternatively use different interface connection manners in the foregoing embodiment or a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the terminal device 100. When charging the battery 142, the charging management module 140 may further supply power to the terminal device by using the power management module 141.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Structures of the antenna 1 and the antenna 2 in FIG. 1 are merely an example. Each antenna in the terminal device 100 can be configured to cover one or more communication frequency bands. Different antennas may be further multiplexed, to increase antenna utilization. For example, the antenna 1 may be multiplexed as a diversity antenna of a wireless local area network. In some other embodiments, the antenna may be used in combination with a tuning switch.

The mobile communication module 150 may provide a solution, applied to the terminal device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules in the mobile communication module 150 may be disposed in the processor 110. In some embodiments, at least some functional modules of the mobile communication module 150 may be disposed in a same device with at least some modules of the processor 110.

The modem processor may include a modulator and a demodulator. The modulator is configured to modulate a to-be-sent low frequency baseband signal into a medium-high frequency signal. The demodulator is configured to demodulate a received electromagnetic wave signal into a low frequency baseband signal. Then the demodulator transfers the low frequency baseband signal obtained through demodulation to the baseband processor for processing. After being processed by the baseband processor, the low frequency baseband signal is transmitted to the application processor. The application processor outputs a sound signal by using an audio device (not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some embodiments, the antenna 1 of the terminal device 100 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and the GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and a complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal oxide semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format like RGB or YUV. In some embodiments, the terminal device 100 may include one or N cameras 193, where N is a positive integer greater than 1.

The digital signal processor is configured to process a digital signal, and may process another digital signal in addition to a digital image signal. For example, when the terminal device 100 selects a frequency, the digital signal processor is configured to perform Fourier transform on frequency energy.

The video codec is configured to compress or decompress a digital video. The terminal device 100 may support one or more types of video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal device 100, for example, image recognition, facial recognition, speech recognition, and text understanding, can be implemented by using the NPU.

The external memory interface 120 may be configured to connect an external memory card, for example, a micro SD card, to extend a storage capability of the terminal device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the terminal device 100. In addition, the internal memory 121 may include a high-speed random access memory, and may further include a nonvolatile memory, for example, at least one magnetic disk storage device, a flash memory, or a universal flash storage (universal flash storage, UFS).

The terminal device 100 may implement an audio function such as music play and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The terminal device 100 may be used to listen to music or answer a hands-free call by using the speaker 170A.

The receiver 170B, also referred to as an "earpiece", is configured to convert an electrical audio signal into a sound signal. When a call is answered or voice information is received by using the terminal device 100, the receiver 170B may be put close to a human ear to listen to a voice.

The microphone 170C, also referred to as a "mike" or a "microphone", is configured to convert a sound signal into an electrical signal. When making a call or sending a voice message, a user may make a sound near the microphone 170C through the mouth of the user, to enter a sound signal to the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect a sound signal, implement noise reduction, identify a sound source, implement a directional recording function, and the like.

The headset jack 170D is configured to connect a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The terminal device 100 determines pressure intensity based on the change in the capacitance. When a touch operation is performed on the display 194, the terminal device 100 detects intensity of the touch operation by using the pressure sensor 180A. The terminal device 100 may further calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the terminal device 100. In some embodiments, angular velocities of the terminal device 100 around three axes (namely, x, y, and z axes) may be determined by using the gyroscope sensor 180B. The gyroscope sensor 180B may be configured to implement image stabilization during photographing. For example, when the shutter is pressed, the gyroscope sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyroscope sensor 180B may further be used in a navigation scenario and a motion-sensing game scenario.

The barometric pressure sensor 180C is configured to measure barometric pressure. In some embodiments, the terminal device 100 calculates an altitude based on a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the terminal device 100. A magnitude and a direction of gravity may be detected when the terminal device 100 is stationary. The acceleration sensor 180E may further be configured to identify a posture of the terminal device, and is used in an application such as switching between a landscape mode and a portrait mode or a pedometer.

The distance sensor 180F is configured to measure a distance. The terminal device 100 may measure a distance through infrared or laser. In some embodiments, in a photographing scenario, the terminal device 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The terminal device 100 emits infrared light outward by using the light-emitting diode. The terminal device 100 detects infrared reflected light from a nearby object by using the photodiode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear for a call, to automatically turn off a screen for power saving. The optical proximity sensor 180G may also be used in a leather case mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to prevent accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the terminal device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. A touch vibration feedback effect may be customized.

The indicator 192 may be an indicator light, and may be configured to indicate a charging status and a power change, or may be configured to indicate a message, a missed call, a notification, and the like.

The SIM card interface 195 is configured to connect a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible to different types of SIM cards. The SIM card interface 195 is also compatible to an external memory card. The terminal device 100 interacts with a network by using the SIM card, to implement functions such as calling and data communication. In some embodiments, the terminal device 100 uses an eSIM, that is, an embedded SIM card. The eSIM card can be embedded in the terminal device 100, and cannot be separated from the terminal device 100.

A software system of the terminal device 100 may use a layered architecture, an event-driven architecture, a microkernel architecture, a microservice architecture, or a cloud architecture. In embodiments of this application, an Android system with a layered architecture is used as an example to describe the software structure of the terminal device 100.

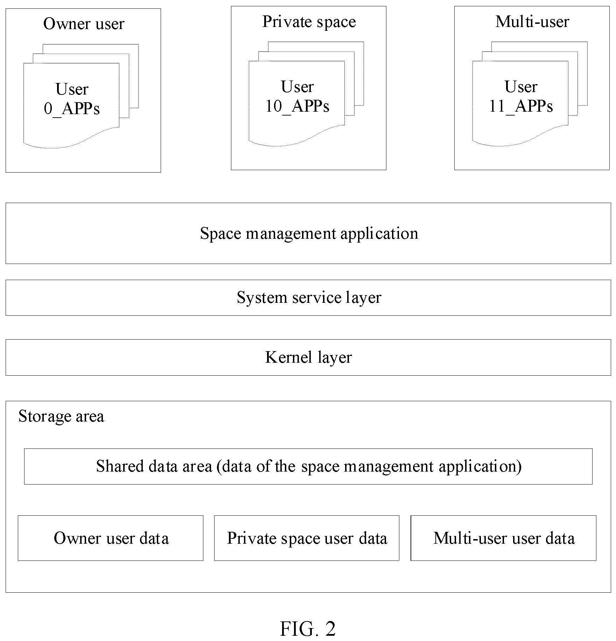

FIG. 2 is a block diagram of the software structure of the terminal device 100 according to an embodiment of this application. In the layered architecture, software is divided into several layers, and each layer has a clear role and task. The layers communicate with each other through a software interface. In some embodiments, the system in this embodiment of this application may include a plurality of layers, which are separately user space apps (owner space user apps, private space apps, and multi-user space apps), a space management app, a system service (system service) layer, a kernel (Linux Kernel) layer, and a storage area from top to bottom. The storage area includes a shared data area that is used to store data of a storage management app, further includes user data, and stores user data in each space (owner space user data, private space data, and multi-user space data).

In FIG. 2, the owner space user data, the private space data, and the multi-user space data are separately stored in paths corresponding to respective user identifiers, to be invoked based on the user identifiers. For example, a path of owner user data is /storage/emulated/0/data/user/0/, a path of user data in a private space is /storage/emulated/10/data/user/10/, and a path of user data of a plurality of users is /storage/emulated/11/data/user/11/.

For ease of understanding, in the following embodiments of this application, a terminal device having the structures shown in FIG. 1 and FIG. 2 is used as an example to describe in detail, with reference to the accompanying drawings and application scenarios, a space management method provided in embodiments of this application.

Space in embodiments of this application may include a main space, a private space, and a multi-user space. The main space is a default space after the terminal device is powered on for the first time, that is, a space to which a device administrator logs in, and may also be generally referred to as an owner space, an owner user space, an administrator space, an administrator user space, or the like. The private space and another multi-user space may be created by using the main space. The private space is a space used by an administrator to perform a private operation, and may be used to install a relatively private application used by the administrator, and store a private file of the administrator, for example, a private photo or a commercial confidential file, to prevent others from viewing or stealing. The private space and main space can be completely independent of each other, and the private space can be accessed by using a fingerprint or a password. For example, a user may enter Settings, and sequentially tap "Privacy-Private space-Open" based on a prompt, to create a private space. After the private space is created, the user may enter a fingerprint or a password for the private space on a lock screen to enter the private space, or sequentially tap "Settings-Privacy-Private space", and tap "Enter" to enter the private space. Optionally, the entrance of the private space may further be hidden, and the entrance of the private space in a main space setting may be hidden. For example, in the private space, "Settings-Privacy-Private space-Hide private space" is entered, the entrance of the private space does not appear in the main space, and in this way, the private space may be entered on the lock screen by using the fingerprint or the password set for the private space. To restore the entrance of the private space, in the main space, "Settings-Security-More security settings" is entered, and "Show all settings-OK" is tapped, to restore the entrance of the private space in the main space. The multi-user space may be a space created when another user needs to use the terminal device, and may also be referred to as a guest space. The guest space may be managed based on a sequence number of creation. Each terminal device may be logged in and used by a plurality of guests. Therefore, there may be a plurality of multi-user spaces. Generally, both the multi-user space and the private space need to be created from the main space. By default, the multi-user space and the private space are closed.

User data in different spaces is usually isolated from each other. When the user needs to share user data in different spaces, user data sharing may be implemented by using a space management application (application, APP).

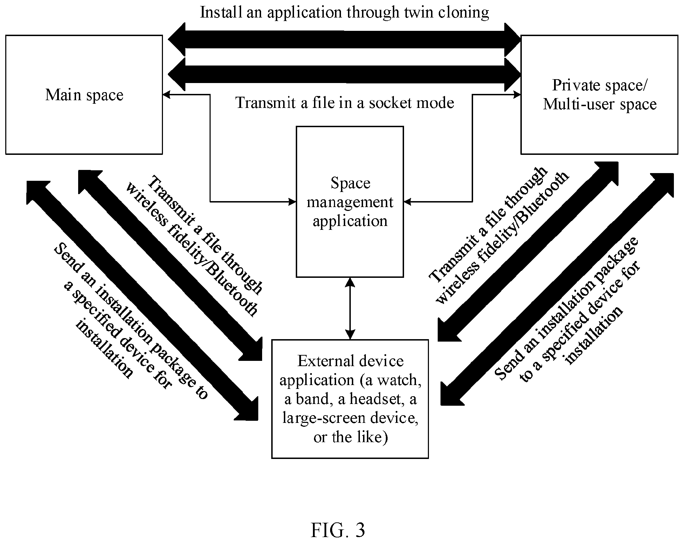

As shown in FIG. 3, data exchange may be performed between the main space and another space (for example, the private space or the multi-user space) by using the space management app.

For example, when an application is shared between the main space and the private space, the user may drag, on a UI of the space management app, an icon of a target app from the main space to the private space, and the target app may be installed from the main space to the private space through twin cloning. The user may alternatively drag, on the UI of the space management app, the icon of the target app from the private space to the main space. The target app may be installed from the private space to the main space through twin cloning.

When a file is shared between the main space and the private space, the user may drag, on the UI of the space management app, an icon of a target file from an interface of the main space to an interface of the private space. The target file may be transmitted from the main space to the private space in a socket communication mode. The user may alternatively drag, on the UI of the space management app, the icon of the target file from the private space to the main space. The target file may be transmitted from the private space to the main space in a socket communication mode.

The main space, the private space, or the multi-user space may alternatively interact with a peripheral device by using the space management app. The peripheral device may be an electronic device like a personal computer (personal computer, PC), a tablet computer, a watch, a band, a headset, a large-screen device (a smart television or a projection device), or virtual reality (virtual reality, VR) glasses.

For example, when an application is shared between the main space and the peripheral device, the user may drag, on the UI of the space management app, an icon of a target app from the peripheral device to the main space, the private space, or the multi-user space. In this case, the peripheral device may send an Android package (Android package, APK) of the target app to the corresponding space in a communication mode such as Wi-Fi or Bluetooth. Then, APK may be installed in the space in which the APK is received, to implement application sharing. The user may alternatively drag, on the UI of the space management app, the icon of the target app from the main space, the private space, or the multi-user space to the peripheral device. An electronic device in which the target app is located may send the APK of the target app to the peripheral device in a communication mode such as Wi-Fi or Bluetooth. Then, the peripheral device may install the APK, to implement application sharing.

When a file is shared between the main space, the private space, or the multi-user space and the peripheral device, the user may drag, on the UI of the space management app, an icon of a target file from the peripheral device to the main space, the private space, or the multi-user space. In this case, the peripheral device can send the target file to the main space, the private space, or the multi-user space in a communication mode such as Wi-Fi or Bluetooth, to implement file sharing. The user may alternatively drag, on the UI of the space management app, the icon of the target file from the main space, the private space, or the multi-user space to the peripheral device. An electronic device in which the target file is located may send the target file to the peripheral device in a communication mode such as Wi-Fi or Bluetooth, to implement application sharing.

The following describes examples of performing application sharing and files sharing between different spaces.

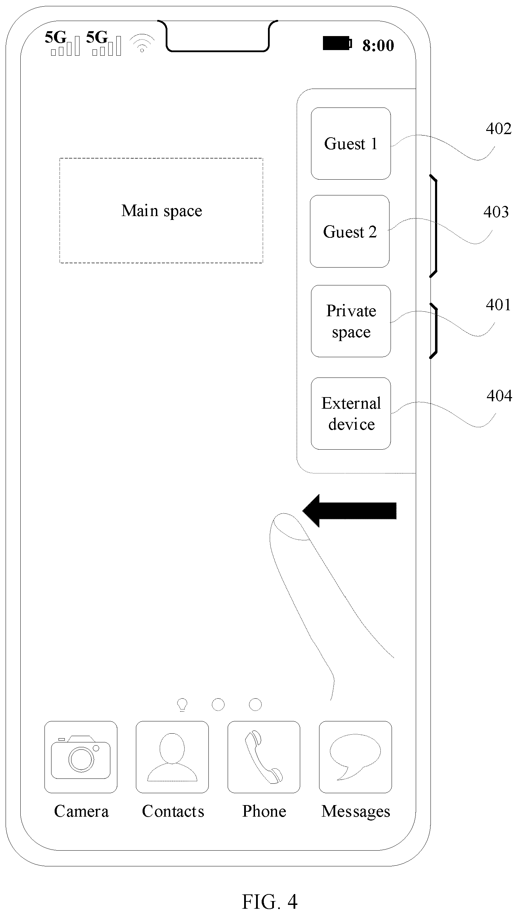

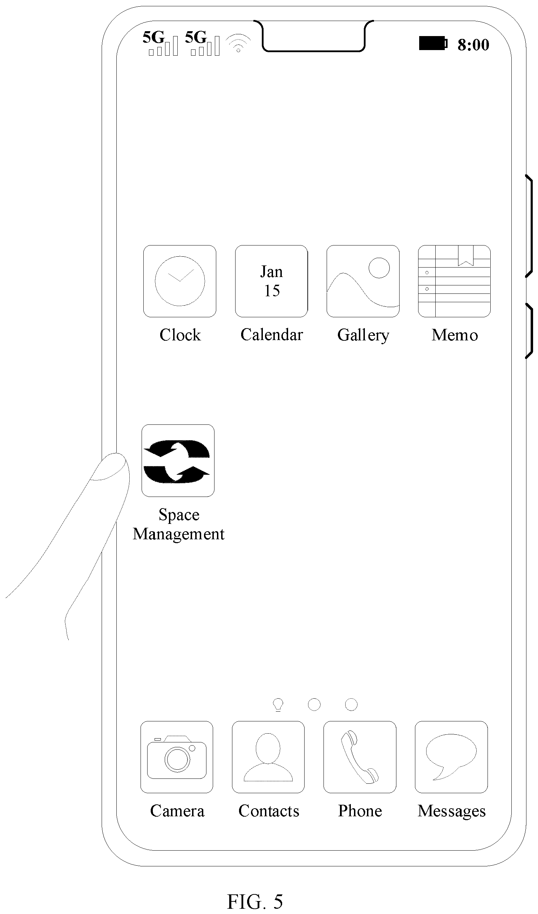

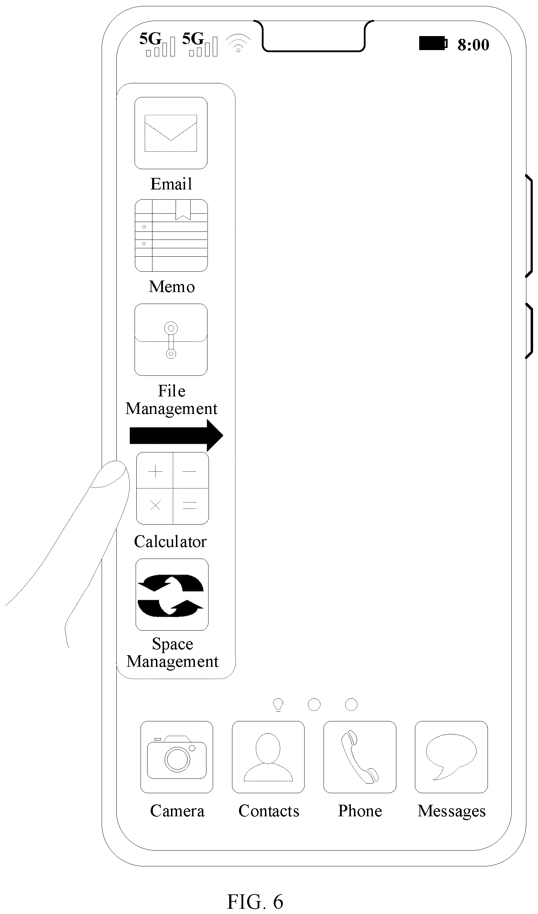

FIG. 4 is a schematic diagram of an interface operation of entering a space management app. A user may slide a screen edge of a terminal device on a first user interface of a first user space. After detecting a signal corresponding to the sliding operation, the terminal device opens a smart split screen application bar including icons of a plurality of different user spaces. For example, as shown in FIG. 4, each user space may be displayed on an interface of the terminal device in a manner of an icon list, for example, displayed on a left side or a right side of a screen. In FIG. 4, displaying on the right side of the screen is used as an example. Alternatively, the user may tap an icon of the space management app on the first user interface of the first user space to start the space management app, as shown in FIG. 5. If a space currently running on the terminal device is a main space, the first user interface is an interface of the main space. Optionally, the user may alternatively slide the screen from outside to inside with a single finger on a left side or a right side of the screen of the terminal device and pause. After detecting a signal corresponding to the operation, the terminal device displays a shortcut start bar on a side from which the screen is slid. The shortcut start bar may include a list of to-be-selected apps, and the list may also include the icon of the space management app, as shown in FIG. 6. The user taps the icon of the space management app in the shortcut start bar to open the smart split screen application bar. Optionally, the first user space and a second user space may be different user spaces of a same device, or may be user spaces of different devices. In this embodiment shown in FIG. 4, the smart split screen application bar may display icons of a private space (401), a guest 1 (402), a guest 2 (403), and an external device (404), respectively representing a private space, a user space of the guest 1, a user space of the guest 2, and a user space of the external device. In other words, in this application, the electronic device may also be abstracted as a user space. For example, the peripheral device is equivalent to the user space of the peripheral device.

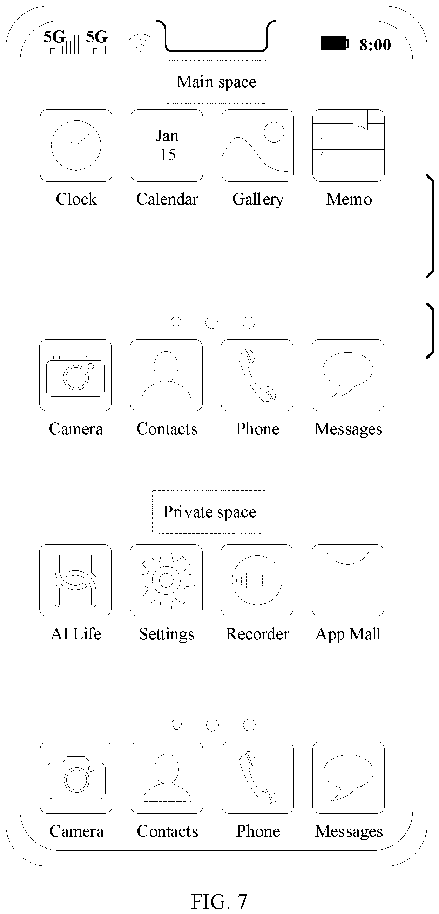

When the user may tap the icon 401 of the private space in the smart split screen application bar, the terminal device displays an interface of the main space and an interface of the private space on the screen of the terminal device through screen splitting, to implement split-screen display of the two user spaces, as shown in FIG. 7. FIG. 7 is an example of a second user interface. In FIG. 7, an upper half is a first area, and a lower half is a second area. Optionally, the upper half may be a second area, and the lower half may a first area. This is not limited in this embodiment of this application. This split-screen display manner avoids a cumbersome operation of repeatedly switching user spaces to compare differences of apps stored in different user spaces, so that the user can intuitively compare differences of apps installed in two spaces. For example, applications such as Clock, Calendar, Gallery, and Memo are installed in the main space, and applications such as AI Life, Settings, Recorder, and App Mall are installed in the private space.

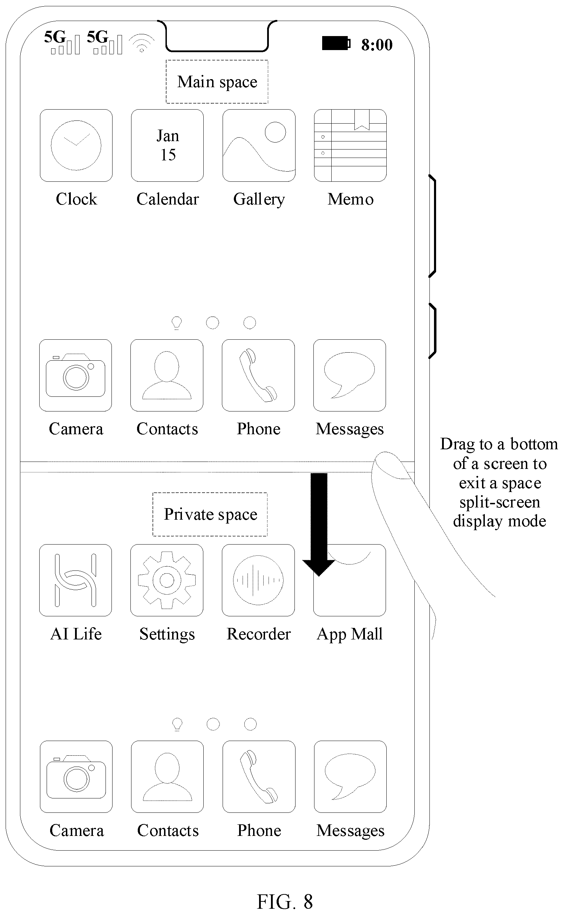

In a process of displaying two user spaces through screen splitting, the terminal device may display the interface of the main space in the first area of the screen of the terminal device based on a coordinate mapping rule, load a system interface (systemui) twin resource of the private space in the second area of the screen, and load the system interface twin resource from a screen lock module (keyguard) of the mobile phone to an interface initiator (launcher) of an Android system, to display the interface of the private space in the second area of the screen. Optionally, the first area and the second area may be arranged from top to bottom or from left to right, in FIG. 7, an example in which two areas are arranged from top to bottom is used, and the two areas are divided through a screen division line. Optionally, in a schematic diagram of an interface operation shown in FIG. 8, the user may exit a split-screen display mode by pulling up or pulling down the screen division line, that is, exit the space management app.

Optionally, the coordinate mapping rule may be a rule of zooming in or out an interface of the user space based on a proportional relationship, or may be a rule of arranging an app icon or a file icon in the user space in a corresponding area in a grid alignment order. A specific coordinate mapping rule is not limited in this embodiment of this application.

The user may start the space management app in any user space by using the method in the foregoing embodiment, to implement split-screen display of any two user spaces.

The operation of displaying the first user space and the second user space through screen splitting by using the space management app may be used as a first operation. Optionally, the first operation may include: starting the space management application app on the first user interface, and performing an operation on an icon of the second user space on an interface of the space management app. For example, the space management app is opened on the first user interface, and the icon corresponding to the second user space in the space management app is tapped; and the terminal device can select the second user space by the user starting the space management app and operating the space management app. The method is easy to implement, a convenient operation on a plurality of user spaces can be conveniently implemented by using the space management app. The first operation may alternatively include: sliding from a side of the screen to the middle of the screen on the first user interface to start the application bar, and performing an operation on an icon of the second user space in the application bar. In this manner, the terminal device can start the quickly started application bar, and quickly select the second user space by using the application bar, so that an operation in the second user space is more convenient. The first operation may alternatively include: performing an operation on a shortcut button on the first user interface. The shortcut button corresponds to the second user space, for example, the second user space can be entered or selected by using the shortcut button. The shortcut button is one button or a combination of a plurality of buttons, or may be set by the user based on use portability, and it is more convenient to enter or select the second user space by using the shortcut button corresponding to the second user space.

After the space management app is started, based on different user spaces displayed through screen splitting, the user may perform application sharing and file sharing between different user spaces based on the following embodiments. That is, a first object may include a first app, a file, or the like. Data of the first object may include authorization information of the first app, to-be-decoded data, or the like.

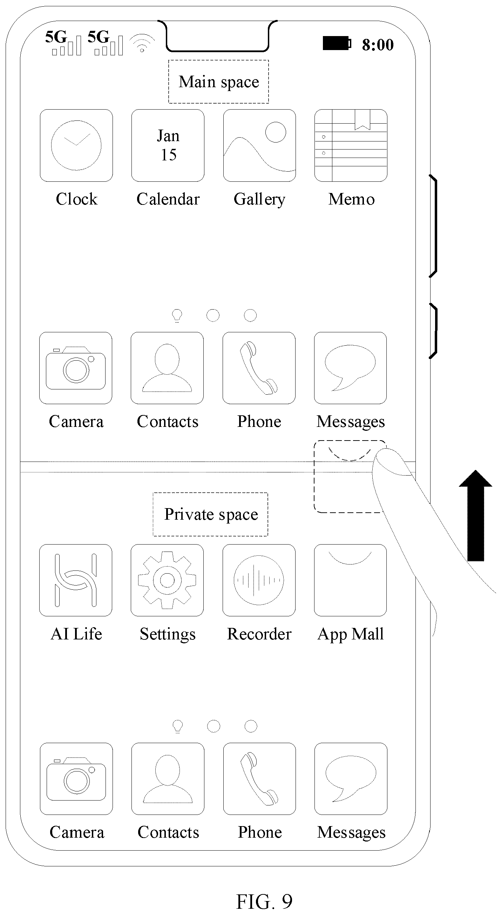

FIG. 9 is a schematic diagram of an interface operation of performing application sharing between the private space and the main space.

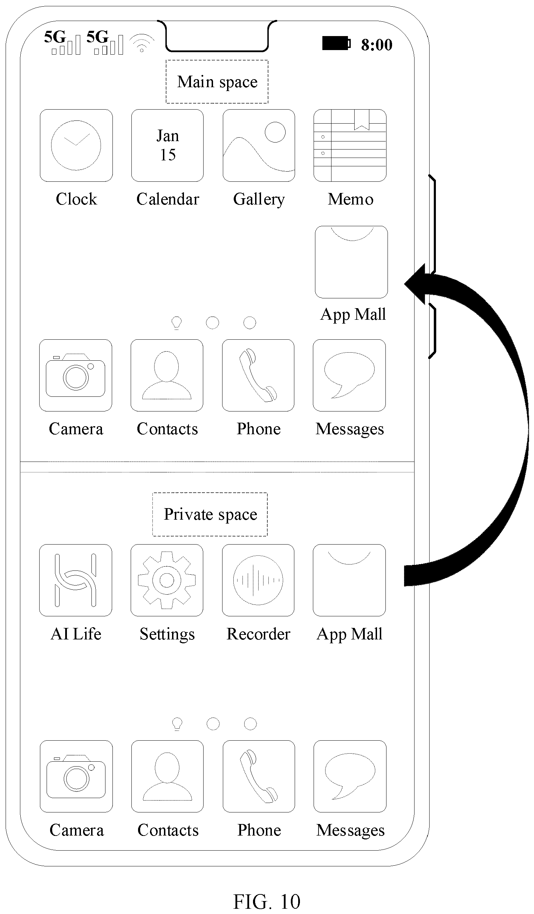

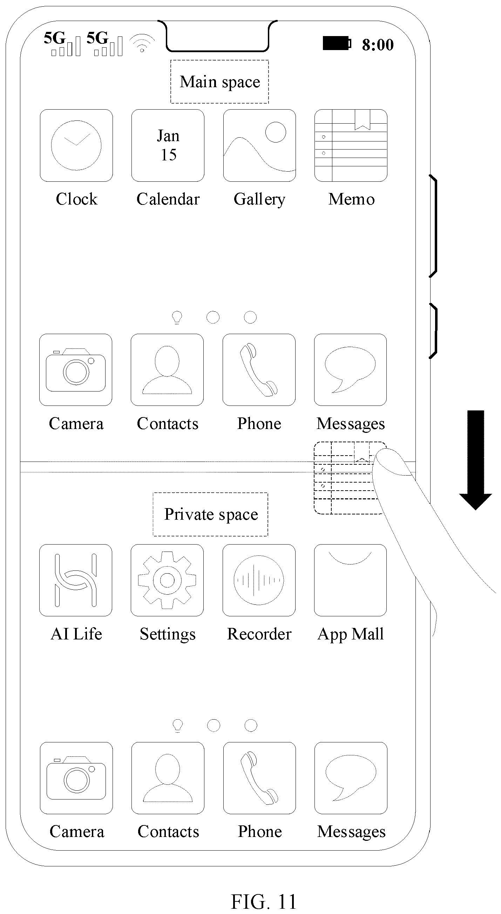

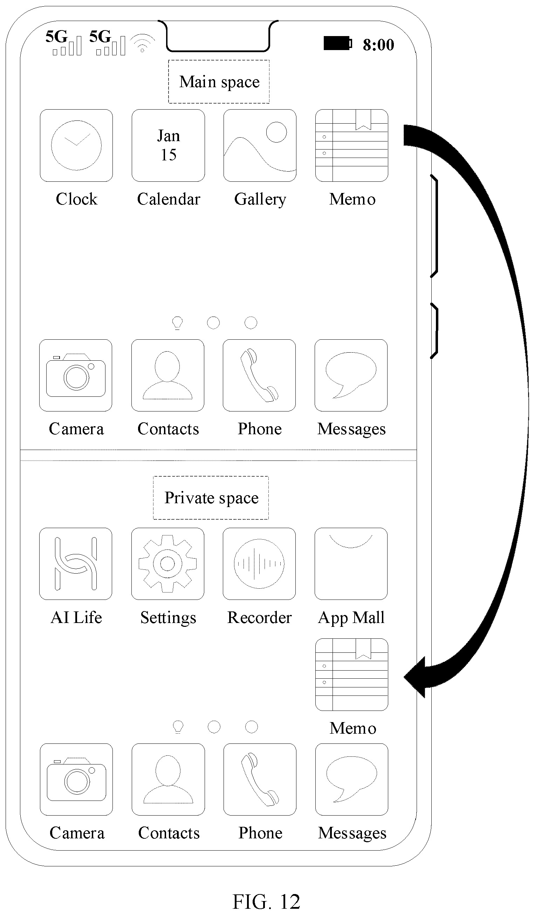

When the first app has been installed in the private space, but the first app does not exist in the main space, in FIG. 9, that the first app is an App Mall app is used as an example. If the user needs to install the App Mall app in the main space, an icon of the App Mall app in the private space may be dragged to an area of the main space. The dragging operation may be used as a second operation, to trigger application sharing. After detecting the dragging operation, the terminal device executes an application sharing process. Optionally, the terminal device may further generate an icon of the first app on the interface of the main space. For an interface shown in FIG. 9 obtained after application sharing is completed, refer to FIG. 10. Optionally, the first app in the main space may be dragged to the private space to implement application twinning of the first app in the private space. For example, as shown in FIG. 11, FIG. 11 is a schematic diagram of an operation of dragging Memo in the main space to the private space. For a diagram of an interface obtained after memo sharing is completed, refer to FIG. 12.

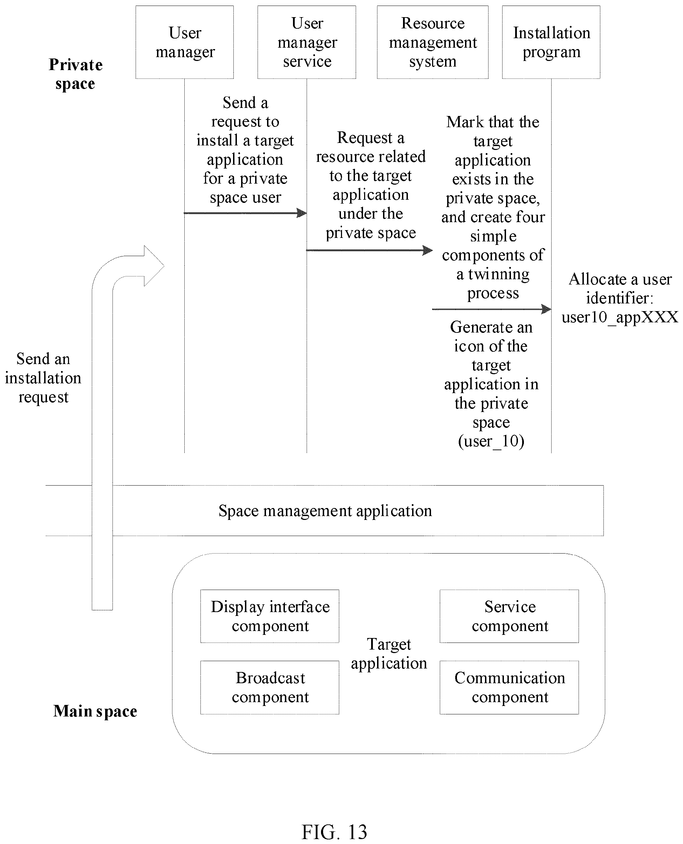

The foregoing application sharing process may be shown in FIG. 13. When the user drags the icon of the first app from the first area corresponding to the main space to the second area corresponding to the private space, the main space sends an installation request of the first app to the private space, and a user manager (user manager) of the private space sends, based on the installation request, a request to a user manager service (user manager service) to install the first app for the user of the main space. Then, the user management service sends an application twinning request of the private space to a resource management system (resource management system, RMS). The RMS marks that the first app exists under a user (for example, user_10) of the private space, and creates four components of the twinning process, including a display interface (activity), a service component (service), a broadcast component (broadcast), and a communication component (communication), to implement installation of the first app in the private space. Therefore, an APK does not need to be re-parsed for installation. In addition, the icon of the first app may be further generated on an interface initiator of the private space, for example, as shown in FIG. 10 and FIG. 12. The twinning process allocates a user identifier (user identifier, UID) to a target app. For example, a UID allocated to the first app in the private space may be denoted as user10_appXXX, where XXX represents an application identifier of the first app, and indicates which app is the first app. Optionally, an installation directory of the first app may be a default path: /data/user/10/APP 1, or may be another path manually set by the user. This is not limited in this embodiment.

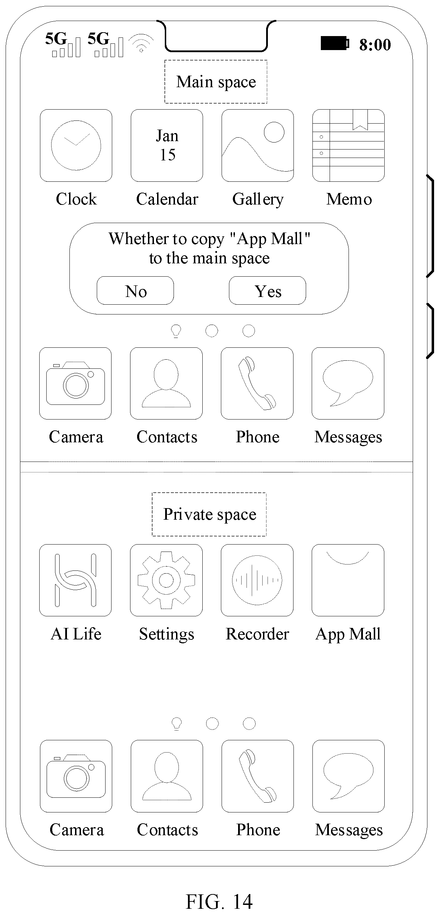

Optionally, when the user drags the icon of the first app in the private space to the interface of the main space, the terminal device may further prompt the user on the interface whether to perform application twinning, for example, may pop up a dialog box for the user to select "Yes" or "No", as shown in FIG. 14. After the user selects "Yes", the app twinning process continues. If the user does not want to install the first app in the main space in this case, the user may select "No" to cancel the operation, so as to avoid invalid resource occupation caused by an accidental touch.

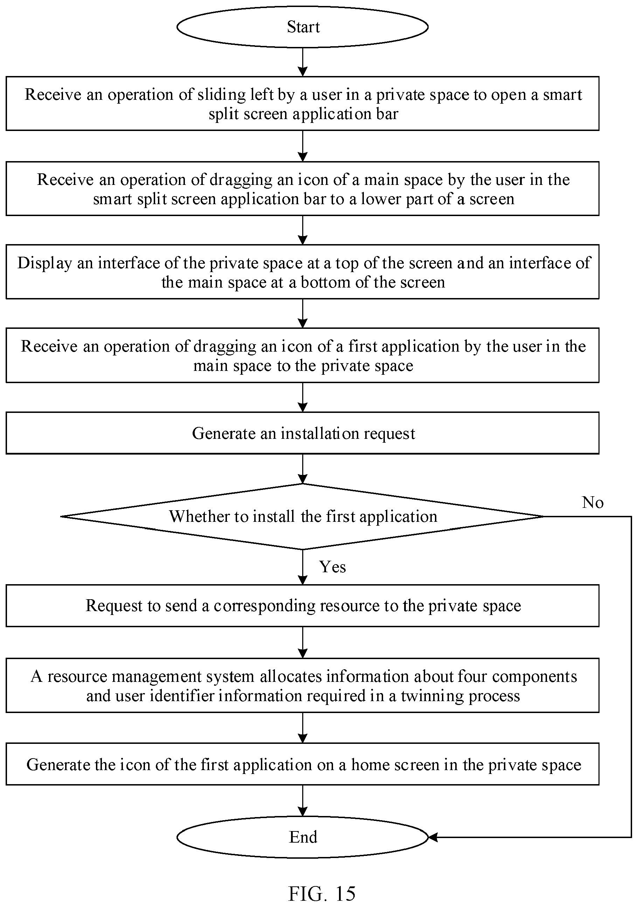

FIG. 4 to FIG. 14 are schematic diagrams or flowcharts of interface operations of performing application sharing by the user based on different spaces displayed through screen splitting. For a method for performing application sharing between the private space and the main space, refer to a process shown in FIG. 15. As shown in FIG. 15, when the sharing process starts, the user performs an operation of sliding left in the private space to open the smart split screen application bar, and drags an icon of the main space in the smart split screen application bar to the lower half of the screen, to implement the second operation. In this case, the terminal device displays the private space and the main space on the top and the bottom of the screen respectively, that is, displays the second user interface. When the user drags, on the second user interface, the first app in the first area of the main space to the second area of the private space, the main space generates the installation request of the first app and sends the installation request to the private space. In this case, the terminal device determines whether the first app needs to be installed, and may pop up a prompt dialog box "Whether to copy the XX program to the private space" on the interface, where the dialog box may include two buttons "Yes" and "No". If the user taps "Yes", the user manager (user manager) of the private space requests, based on the installation request, a corresponding resource to a private space of the to-be-installed app. The resource management system allocates information of the four components of the twinning process and a user identifier, and generates the icon of the first app on a home screen of the private space. In this case, the process ends. If the user taps "No", the process ends.

According to the method provided in this embodiment, the user can perform simple operations on interfaces of two user spaces that are displayed on the same screen, and perform cross-user space application twinning on an existing app in another user space, thereby fully utilizing an existing resource of the terminal device. By comparing with a conventional complex processing process in which an APK needs to be re-downloaded and re-parsed when an app is installed in another user space and dependency on a network, the method makes an app installation operation more convenient and installation efficiency higher.

The foregoing describes the solution of performing application sharing based on different spaces displayed through screen splitting. File sharing may be further performed based on different spaces displayed through screen splitting. For an operation of displaying the main space and the private space through screen splitting, refer to the foregoing descriptions in FIG. 4 to FIG. 6. Details are not described herein again.

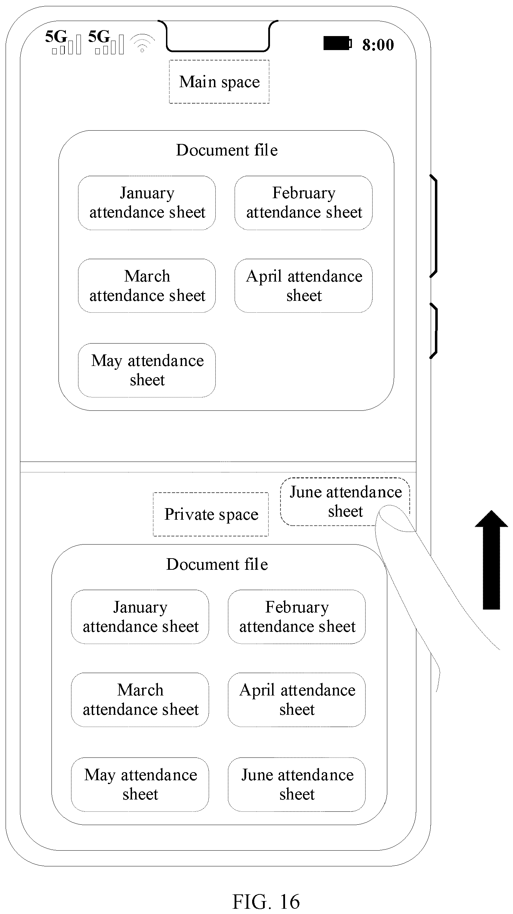

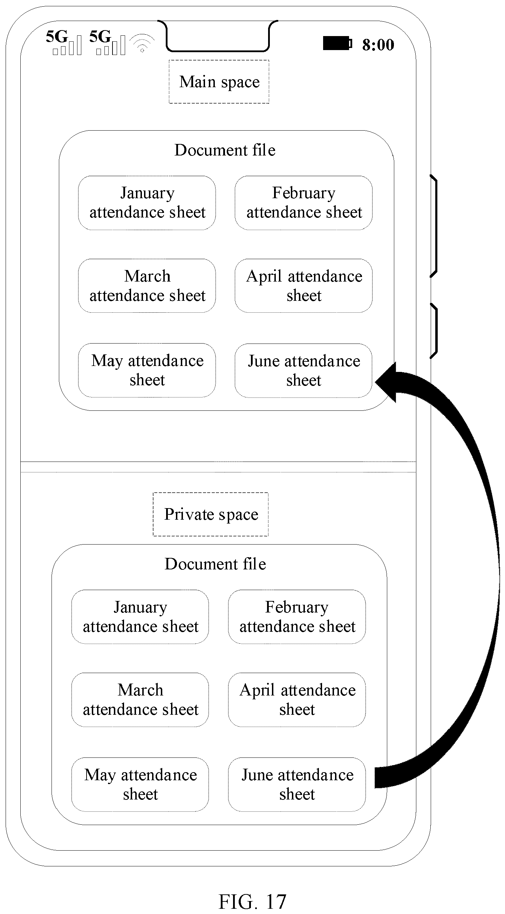

FIG. 16 is a schematic diagram of an interface operation of performing file sharing between the private space and the main space. In this embodiment, the first object may be a to-be-shared file. In the operation manner shown in FIG. 16, the user drags a file "June attendance sheet" from the interface of the private space to the interface of the main space displayed through screen splitting, that is, implements the second operation. After detecting a signal of the dragging operation, the terminal device executes a file sharing process. Then, an icon of "June attendance sheet" is displayed on the interface of the main space, as shown in FIG. 17. On the interfaces of the private space and the main space that are displayed through screen splitting shown in FIG. 16, the user can easily identify that the document "June attendance sheet" exists in the private space but does not exist in the main space, thereby avoiding a cumbersome operation of repeatedly switching between different space interfaces to compare stored data differences, and facilitating the user intuitively comparing differences between files stored in the two spaces.

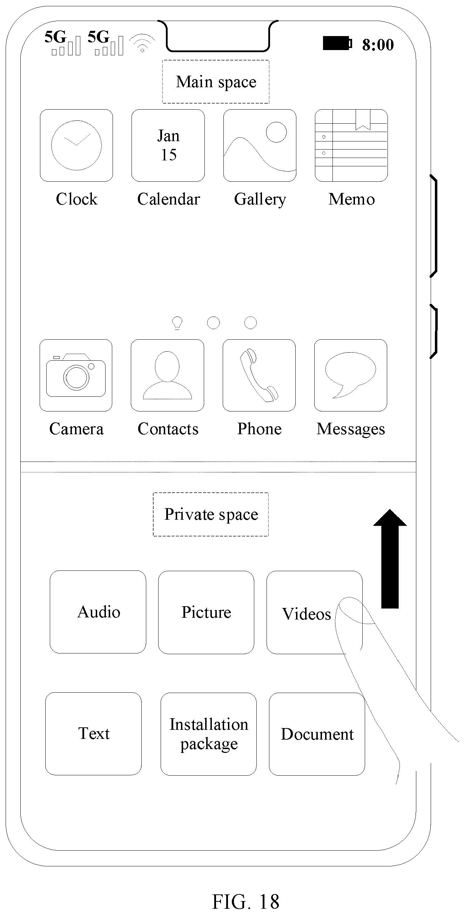

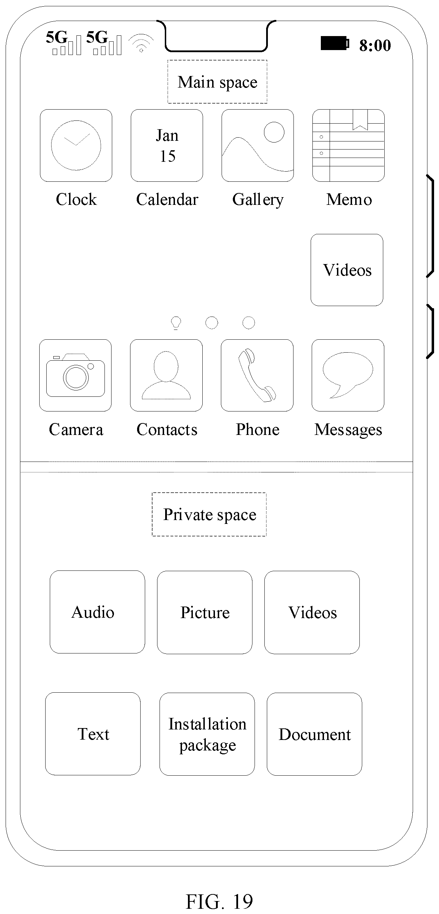

Optionally, the file in this embodiment of this application may include files of various types, for example, files of various types such as a text, a picture, a video, audio, and an installation package. When the user drags a video file from the private space, refer to a schematic diagram of an interface operation of sharing the video file shown in FIG. 18. The user may drag the video file to an icon or a page of a file manager of the main space, and in this case, the to-be-shared video file may be displayed on an interface of the file manager; or the user may drag the video file to a blank area of a home screen of the main space, and in this case, the to-be-shared video file may be displayed on the interface of the main space, as shown in FIG. 19.

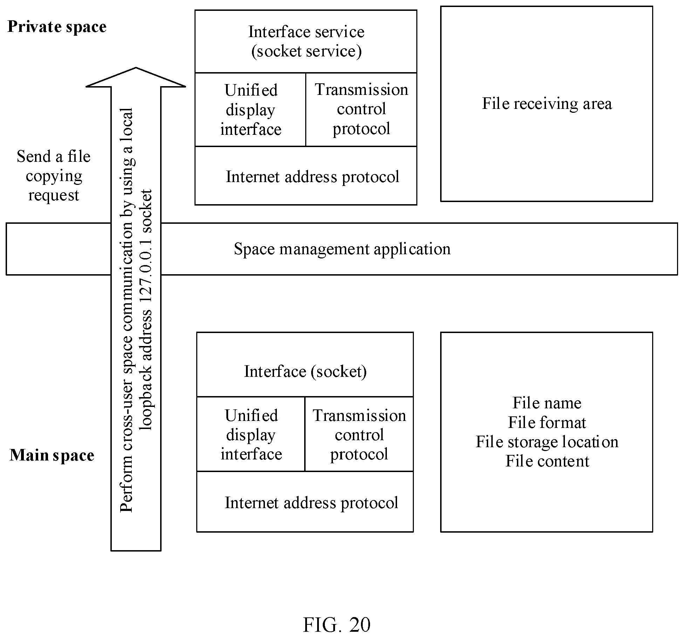

Specifically, for a file sharing process, refer to FIG. 20. Based on the foregoing file dragging operation, the main space sends a file copying request to the private space, the private space serves as a server (socket server) to create a service connection, and waits for a file sent by the main space; and the main space serves as a client (client) to create a socket connection, connects to the server, and prepares related information about the to-be-sent file. The related information includes but is not limited to a file name, a file format, a file storage location, and file content. Being processed based on an internet protocol (internet protocol, IP) address, and a unified display interface (unified display interface, UDI), a transmission control protocol (transmission control protocol, TCP), and a socket service (socket service), a target file is sent, by using a local loopback address 127.0.0.1, from the main space to a file receiving area of the private space for storage in a socket mode, to implement cross-user space file sharing. In addition, an icon of the file may be displayed on the interface of the private space. It may be understood that, when a file needs to be copied from the private space to the main space, the main space serves as a server, and the private space serves as a client for interaction.

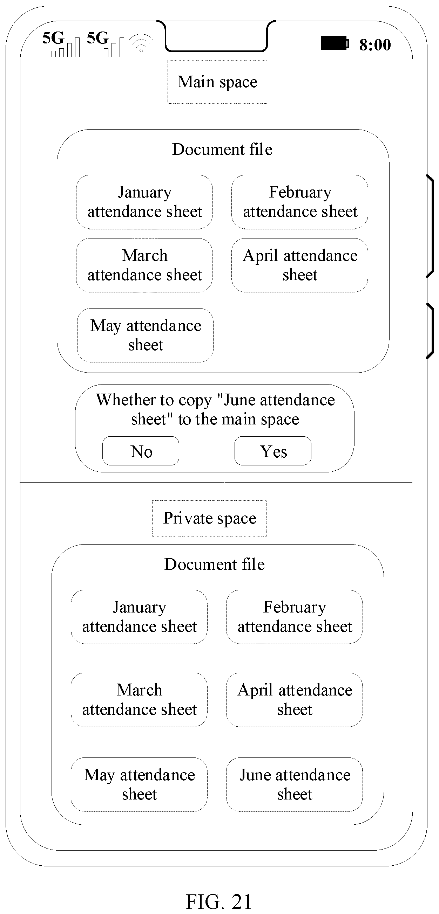

Optionally, a directory for storing the shared file may be a default path, for example, /storage/emulated/1, or may be another path selected by the user. This is not limited in this embodiment of this application. Optionally, the terminal device may further prompt, when the user drags the icon of the file, the user whether to perform file transmission. For example, as shown in FIG. 21, the interface displays "Whether to copy "June attendance sheet" to the main space", and when the user enters an instruction for confirming transmission, for example, the user yaps a "Yes" button, the terminal device continues to perform a file transfer operation, to avoid a misoperation.

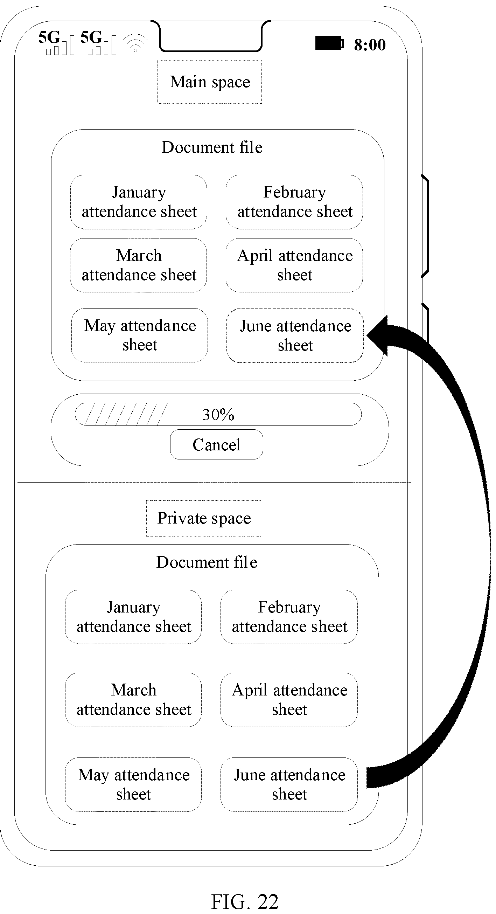

In some embodiments, in a file transmission process, the interface of the terminal device may further display transmission progress in a percentage or progress bar manner, as shown in FIG. 22, so that the user intuitively learns the file transmission progress. Optionally, the interface of the terminal device may further display a cancel button. For example, after performing a dragging operation on "June attendance sheet", the user finds that the operation is incorrect or "June attendance sheet" does not need to be shared to the main space, and may tap the cancel button in file copying process, to stop the current file sharing process, so as to avoid invalid data sharing and enrich application functions.

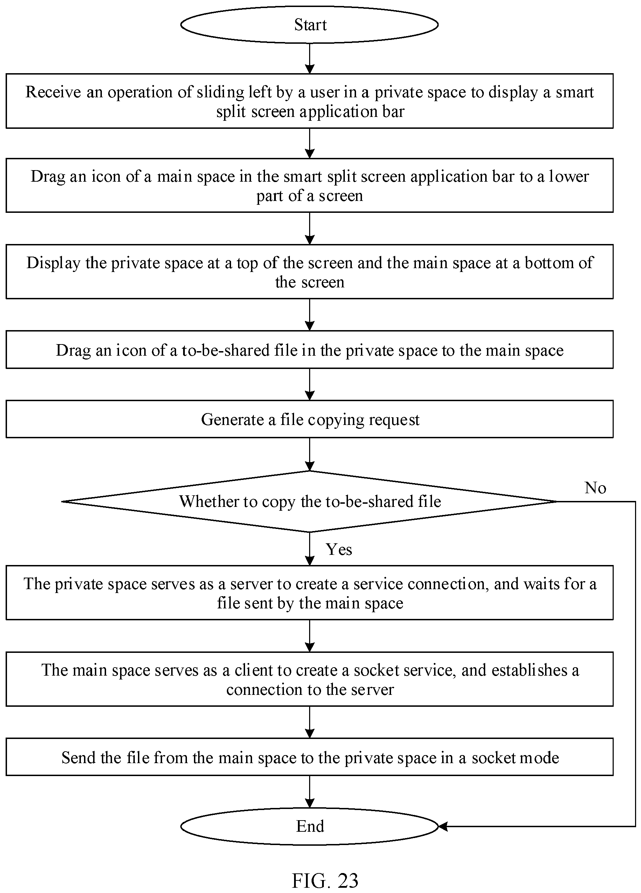

FIG. 16 to FIG. 22 are schematic diagrams or flowcharts of interface operations of performing data sharing by the user based on different spaces displayed through screen splitting. For a method for performing data sharing between the private space and the main space, refer to a process in FIG. 23. When the sharing process starts, the user performs an operation of sliding left in the private space to open the smart split screen application bar, and drags an icon of the main space in the smart split screen application bar to the lower half of the screen. In this case, the terminal device displays the private space and the main space on the top and the bottom of the screen respectively, to obtain the second user interface. When the user drags, on the second user interface, an icon of the to-be-shared file in the main space to an area of the private space, the main space generates a file copying request and sends the file copying request to the private space. In this case, the terminal device determines whether the to-be-shared file needs to be copied, and may pop up a prompt dialog box on the interface, where the prompt dialog box may include two buttons "Yes" and "No". If the user taps "Yes", the private space serves as a server to create a service connection, and waits for the main space to send the file; and the main space serves as a client to create a socket service, and connects to the server. Then the file is sent from the main space to the private space in a socket mode, and an icon of the shared file is generated on the home screen of the private space. In this case, the process ends. If the user taps "No", the process ends.

According to the data sharing method provided in the foregoing embodiment, simple operations can be performed on files in two user spaces that are displayed on the same screen, to implement cross-user space data sharing. The method is simple and convenient to operate. In addition, a file is transmitted across user spaces in a socket mode, and a data transmission speed is high and is not limited by a file type. Compared with a conventional manner of sharing a media type file by using a global variable, this manner can implement data sharing of various types, has more abundant functions, and has a wider application scenario.

In the foregoing embodiment, a process of sharing resources of different user spaces of a same device is described. The resource sharing manner described in this application may be further applied between different devices, for example, between a terminal device and another external device. The external device may be another electronic device that is not the foregoing terminal device, for example, a smartphone, a band, a watch, a robot, or a television. Optionally, data exchange between different devices may be performed through short-distance wireless communication such as Wi-Fi or Bluetooth. This is not limited in this embodiment of this application.

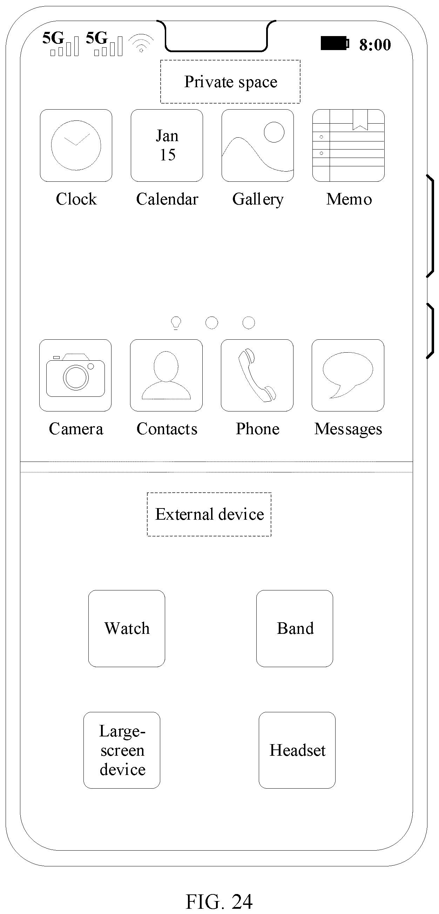

In an embodiment, the terminal device starts the smart split screen application bar on the first user interface. For a manner of starting the smart split screen application bar, refer to the descriptions in the foregoing embodiment. The smart split screen application bar may further display an icon of the external device 404, as shown in FIG. 4. The user taps the icon of the external device 404 in the smart split screen application bar, to implement split-screen display of an interface of an external device app and the interface of the private space, and perform a third operation. In this case, an icon of at least one external device connected to the terminal device is displayed on the interface of the external device app. For example, as shown in FIG. 24, an example in which icons of four different external devices (a watch, a band, a large-screen device, and a headset) are included is shown in FIG. 24. When the user needs to perform data exchange with one of the external devices, the user taps the icon of the external device, and the terminal device may display an interface of the selected external device and the interface of the private space through screen splitting, and use an interface that displays the interface of the selected external device and the interface of the private space through screen splitting as a third user interface. The operation of displaying the interface of the external device and the interface of the private space through screen splitting may be a third operation. The third operation may alternatively be: tapping the icon of the space management app on the home screen, opening the space management app, and tapping, on the interface of the space management app, the icon of the external device that needs to be shared, to display a user space of the external device and the private space through screen splitting. The third operation may alternatively be: tapping a shortcut button corresponding to the external device, to display the user space of the external device and the private space through screen splitting.

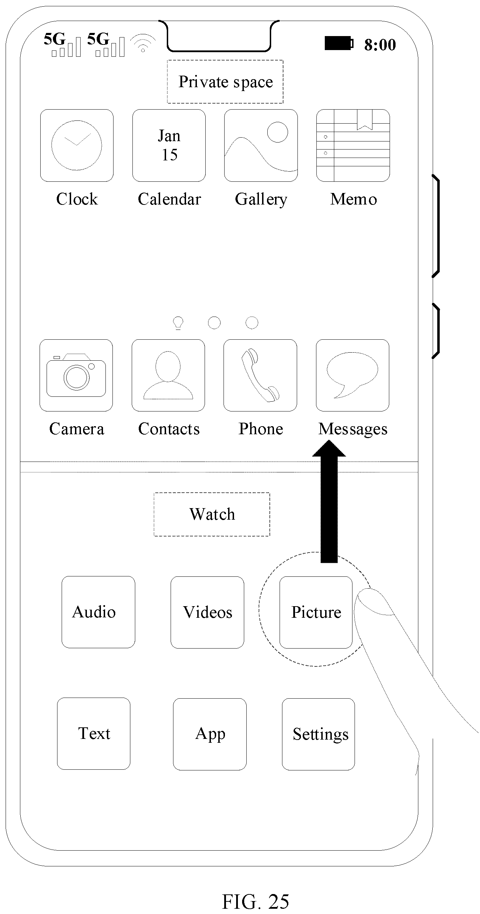

Optionally, an operation interface of the external device displayed on the terminal device may be the same as the interface of the external device, and an operation manner is also the same as that of the external device, to facilitate an operation. FIG. 25 shows an example in which the external device is a watch and a second object is a to-be-shared picture. When the user drags, on the third user interface, the second object, that is, the picture, from a third area corresponding to a watch interface to the first area corresponding to the interface of the private space, that is, when the user performs a fourth operation, the picture may be sent to a directory of the private space, so as to quickly implement cross-device data sharing. Optionally, the user may alternatively drag the first object, that is, the file, from the first area corresponding to the private space to the third area corresponding to the watch, that is, the user performs the fourth operation, so that the file in the private space can be shared to the watch.

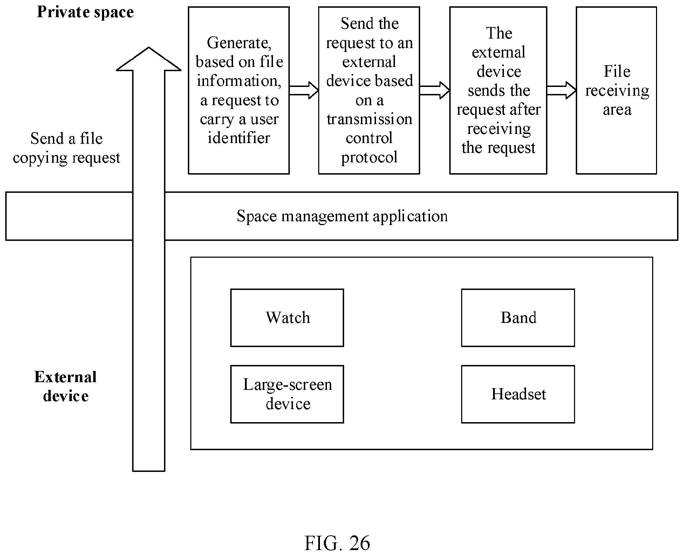

FIG. 24 and FIG. 25 show examples of displaying the space of the external device and the private space of the device through screen splitting. Optionally, the main space of the device and the space of the external device may be displayed through screen splitting. When the user needs to share a file of the external device to the terminal device, the user drags, based on a split-screen display result, the file of the external device, that is, a second object, to the interface of the private space. FIG. 26 is a flowchart of cross-device data sharing. As shown in FIG. 26, based on a dragging operation of the user, that is, the fourth operation, the external device sends a file copying request to the terminal device, the terminal device encapsulates a UID of the private space into file information, and sends the file information to the external device through Wi-Fi or Bluetooth. The external device identifies the UID, determines that a target space of the to-be-sent file is the private space, and sends the file information to the private space based on an instruction of the UID. The terminal device stores the received file in a file receiving area of the private space, that is, a specified directory. The file information may include but is not limited to information such as a file location, a file type, and a file name. Optionally, in the foregoing UID, 0 represents the main space, 10 represents the private space, 11 represents a space of the guest 1, 12 represents a space of the guest 2, ..., 19 represents a space of a guest 9, and the like. When the user needs to send a file of the terminal device to the external device, after the user displays, by using the space management app, the interface of the external device and the interface of the private space through screen splitting, that is, after the third user interface is displayed, the user drags a file of the private space to the interface of the external device, to implement cross-device file transmission. Optionally, the file may include but is not limited to files of various types such as a picture, a video, audio, a document, and an Android package.

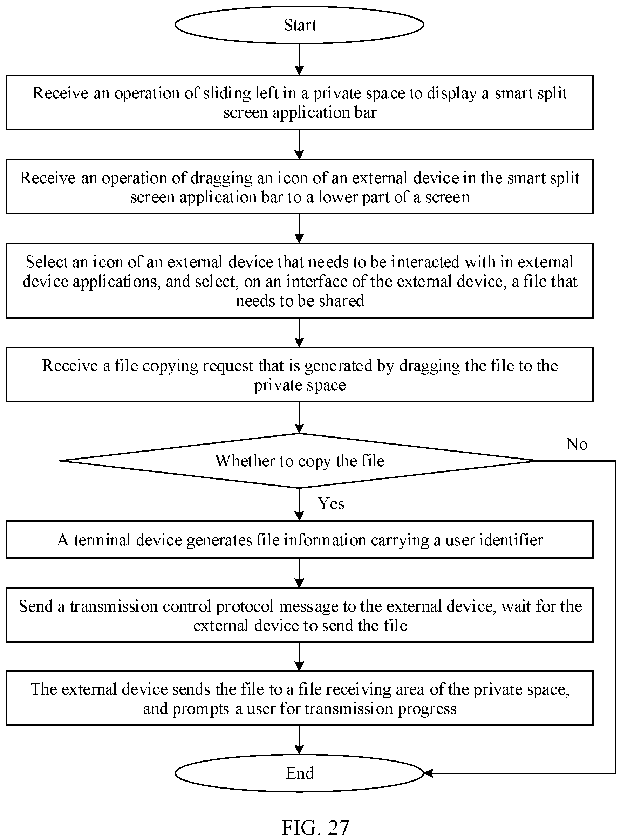

Optionally, in this embodiment, the private space may be replaced with the main space or another user space, to implement data exchange between different spaces and an external device. For details of a method for performing data sharing between the private space and the external device, refer to a process in FIG. 27. When the sharing process starts, the user performs an operation of sliding left in the private space to open the smart split screen application bar, and drags an icon of an external device app in the smart split screen application bar to the lower half of the screen. In this case, the terminal device displays interfaces of the private space and the external device app on the top and the bottom of the screen respectively. The user taps a specific external device icon on the interface of the external device app, for example, the watch, to display a user space of the watch and the private space through screen splitting. In this case, the interface of the private space is displayed in the first area, the user interface of the watch is displayed in the third area on the bottom of the screen, and the currently displayed user interface is the third user interface. When the user drags an icon of a file on an interface of the watch, that is, the icon of the second object in the third area, to the first area displayed in the private space, the external device generates a file copying request and sends the request to the terminal device. In this case, the terminal device determines whether the to-be-shared file needs to be copied, and may pop up a prompt dialog box on the interface, where the prompt dialog box may include two buttons "Yes" and "No". If the user taps "Yes", the terminal device generates file information carrying a user identifier (for example, a UID of the private space), and sends the file information to the external device in a form of a TCP message, to wait for the external device to send the file. The external device sends the file to the file receiving area of the private space. Optionally, the user may be prompted with file transmission progress on the interface of the terminal device or the external device, and an icon of the shared file is generated on the home screen of the private space. In this case, the process ends. Optionally, when the file transmission progress is displayed, a "Cancel" button may also be displayed to terminate the file transmission. If the user taps "No", the process ends.

In this embodiment, the terminal device can display two cross-device user spaces through screen splitting, so that the external device and a specific user space are combined, and file transmission is implemented between the specific external device and the specific user space based on a simple operation performed by the user on the split-screen display interface. Therefore, the operation is more convenient, thereby effectively improving operation efficiency of cross-device file transmission.

In some embodiments, for consideration of factors such as security or privacy, the space management app may be used to implement interaction between apps in different user spaces.

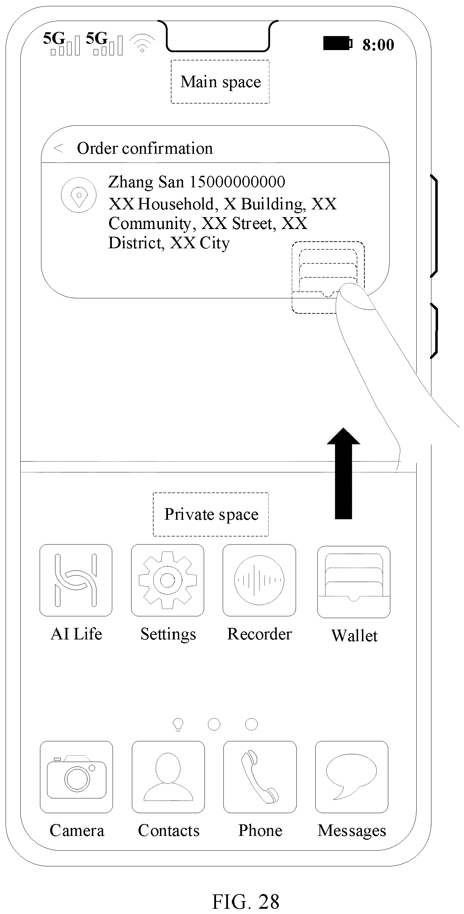

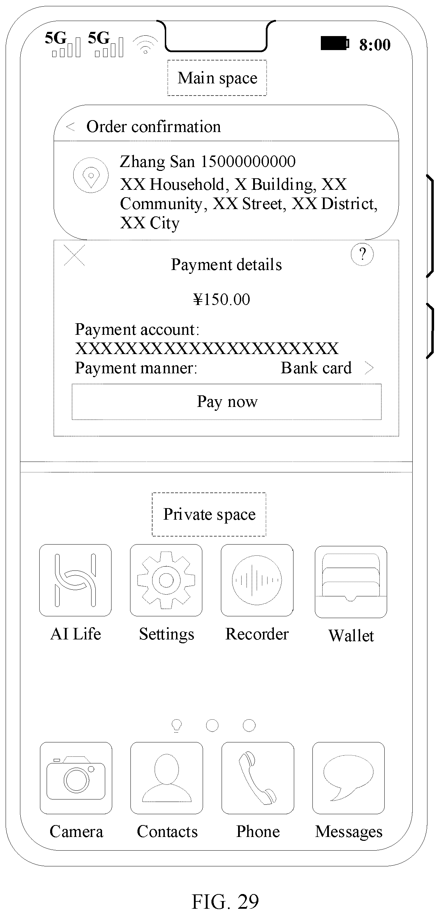

For example, to ensure property security, the user installs a payment app in the private space, for example, installs a Wallet app in the private space, and a shopping app may be installed in the main space due to relatively high use frequency. In this embodiment, cross-space payment authorization may be implemented based on the space management app. FIG. 28 is a schematic diagram of an interface operation of cross-space payment authorization. After determining an order that needs to be paid on the shopping app in the main space, the user may start the space management app, to display the interface of the main space and the interface of the private space through screen splitting, to obtain a second user interface, and then drag an icon of the Wallet app in the private space on the second user interface to an icon of the shopping app in the main space, alternatively, drag to a payment page of the shopping app, to perform a second operation. In this case, the main space serves as a server to create a service connection, and the Wallet app in the private space serves as an entrusting end and establishes a connection to the shopping app in the main space. Then, the main space sends related payment authorization information generated by the shopping app, for example, purchase account information, that is, data of the first object, to the payment app in the private space for authorization authentication. After the authentication succeeds, a payment details page may be further displayed on the interface of the main space, and the user taps a "Pay now" button shown in FIG. 29 to return information about authentication success to the shopping app in the main space, to complete the payment. Optionally, the icon of the shopping app in the main space may be dragged to the icon of the Wallet app in the private space or an interface of the Wallet app, that is, a second operation is performed, to complete payment authorization. A payment authorization process may be performed in a TCP interaction manner. For a method process in this embodiment, refer to FIG. 30. In FIG. 30, the first user interface being the interface of the main space is used as an example. When the authorization process starts, the user may slide left on the interface of the main space from the edge of the screen to start the smart split screen application bar, and then tap an icon of the private space in the smart split screen application bar to display two user spaces through screen splitting, and enter the payment page of the shopping app in the main space. In this case, the terminal device displays the second user interface. The user drags the Wallet app in the private space to the payment page of the shopping app in the main space. The shopping app in the main space serves as a server to establish a socket service, and the Wallet app in the private space serves as an entrusting end to establish a connection to the shopping app. The shopping app sends, to the Wallet app in the private space, authentication and authorization information indicating that payment needs to be performed. After receiving the authentication and authorization information, the Wallet app performs authentication, and returns information about authentication and authorization success to the shopping app in the main space after the authentication succeeds, to complete the purchase process. Optionally, interaction between apps in different user spaces may be bidirectional. Directions of interaction between apps in different user spaces are not limited in this embodiment of this application. In the method, the payment authorization information is sent by the shopping app in the main space to the payment app in the private space for payment authorization. Therefore, payment can be completed without reinstalling the payment app in the main space. This improves portability of a payment operation while ensuring account security. In addition, based on cross-space payment authorization, the method can avoid data leakage that may be caused by a conventional technology center using a shared memory manner, and further improve user data security.

In some scenarios, the user usually stores some private files such as a document, a picture, and a video in the private space. The user may first start the space management app, display the private space and the main space through screen splitting, and then drag an icon of a file that needs to be viewed in the private space to a corresponding app icon in the main space. FIG. 31 is a schematic diagram of an interface operation of decoding a video file by using a player in the main space. The user may implement the second operation based on the first user interface of the main space and the private space that are displayed through screen splitting, that is, drag a video file in the private space to an icon of a multimedia player in the main space. In this case, the terminal device sends the video file, that is, the data of the first object, to the main space in a socket mode, and decodes and plays the received video file in the main space by using the multimedia player. In this method, a multimedia player does not need to be reinstalled in the private space, and the multimedia player already installed in the main space is used to play the video, thereby improving portability of video decoding and playing in the private space. In addition, in this method, the multimedia player can be used across spaces to decode and play a video file in another space, thereby avoiding leakage of a video file that may be caused by caching the video file in a memory sharing manner in a conventional technology, and further improving security of user data.

In some scenarios, the user may forget passwords of some spaces and cannot access the corresponding spaces.

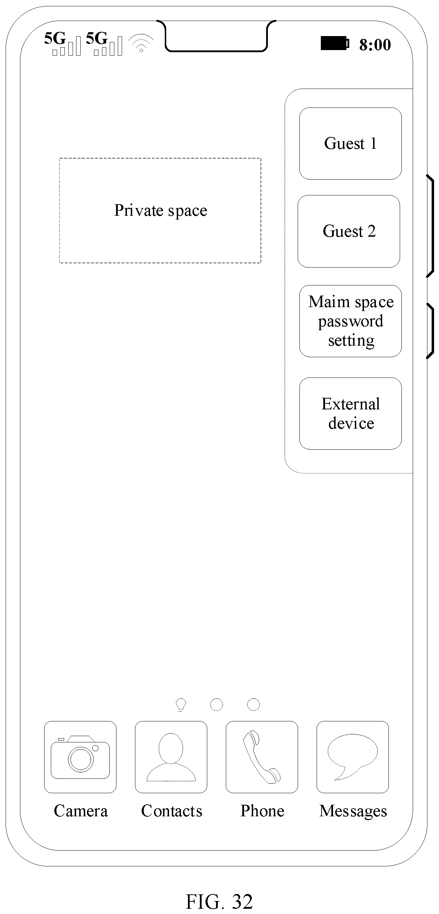

For example, when the user forgets a main space password but does not forget a private space password, if the user can enter the private space after inputting the password, it indicates that the user who uses the terminal device is the owner. The user may reset the main space password on the interface of the private space. For example, when the main space cannot be entered, the terminal device may display an interface shown in FIG. 32, and the user taps a "Main space password setting" button in the smart split screen application bar to reset the main space password. In this method, based on the space management app, when the main space password is forgotten, the main space password is reset by using a private space with a higher security level, thereby avoiding inconvenience caused by clearing password through restoring factory settings, and making resetting of the main space password more convenient and quicker on the premise of ensuring data security.

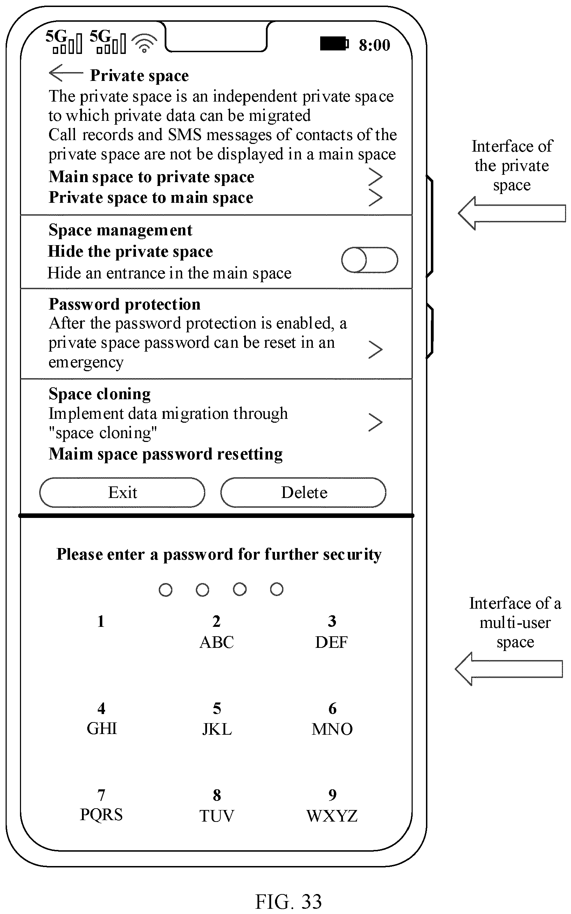

When the user forgets the main space password, but the private space password and a multi-user space password are not forgotten, the user may enter the private space or a multi-user space after inputting the corresponding password. The private space and the multi-user space may be displayed through screen splitting by using the space management app, and it is proved that the user using the terminal device is the owner or a user authorized by the owner. The user may reset the main space password on the interface of the private space. As shown in FIG. 33, on an interface of the private space and the multi-user space displayed through screen splitting, an interface for resetting the main space password is displayed, and the user taps a button of "Reset main space password" to reset the main space password. In this method, based on the space management app, when the main space password is forgotten, the main space password is reset in a manner of joint verification of the private space and the multi-user space, thereby avoiding inconvenience caused by clearing the password through restoring factory settings, and making resetting of the main space password more convenient and quicker on the premise of ensuring data security.

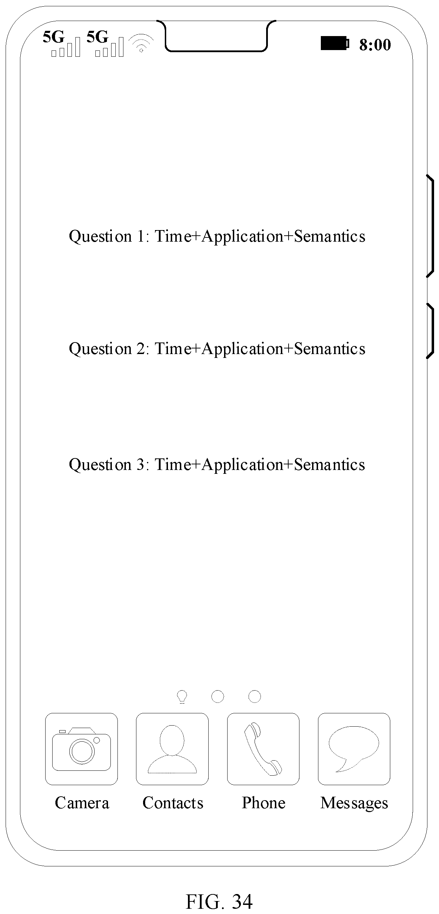

If the user forgets both the main space password and the private space password, the user can use a password protection question of the private space for verification. Generally, content of the private space is known only by the owner, and a corresponding password protection question is set based on the content of the private space. If the password protection question passes the verification, the private space is entered and the password of the private space is reset. Optionally, a password protection question template may be in a form of time+name of an application+semantics. Optionally, one or more password protection questions may be set. As shown in FIG. 34, three password protection questions are used as an example. After the user fails to enter the main space and the private space, the terminal device may pop up a password protection verification interface. The user may input scenario information in the password protection verification interface based on memories, for example, the user enters information such as "June 18, 2019, shopping app, bought a book". The terminal device checks whether a book purchase record exists in purchase information of the shopping app on June 18, 2019. If yes, the terminal device considers that the user who uses the terminal device is the owner, and the verification succeeds. If the purchase record on June 18, 2019 is not the book, or the purchase record is another date, the verification fails. Optionally, the password protection verification interface may alternatively include one or two of an existing time, an existing application name, and existing semantics. The user enters other corresponding information based on the existing information shown by the terminal device and memories of the user. For example, if the terminal device shows "June 5, 2020, camera", the user enters "take a photo of a building", and the terminal device checks the information input by the user, that is, checks whether the photo of the building exists in the photo taken on June 5, 2020 in the album. If the photo exists, the verification succeeds; if the photo does not exist, the verification fails. For another example, the terminal device may further show a notepad, and the user enters "May 1, 2020, coke" based on memories. The terminal device queries whether information of "coke" exists in the notepad. If yes, the terminal device determines whether a storage time of the information is May 1, 2020. If yes, the verification succeeds; if no, the verification fails; or if no information of "coke" exists in the notepad, the verification also fails. Optionally, a form of the password protection question may alternatively be a combination of the foregoing forms. This is not limited in this embodiment of this application. If all password protection questions pass the verification, the user directly enters the private space. Then, the main space password is reset in the private space or in a manner of the private space or the private space+the multi-user space. The method can enter the private space in a manner of verifying a password protection question when both the main space password and the private space password are forgotten, thereby avoiding inconvenience caused by clearing the password through restoring factory settings, and making resetting of the main space password more convenient and quicker on the premise of ensuring data security.

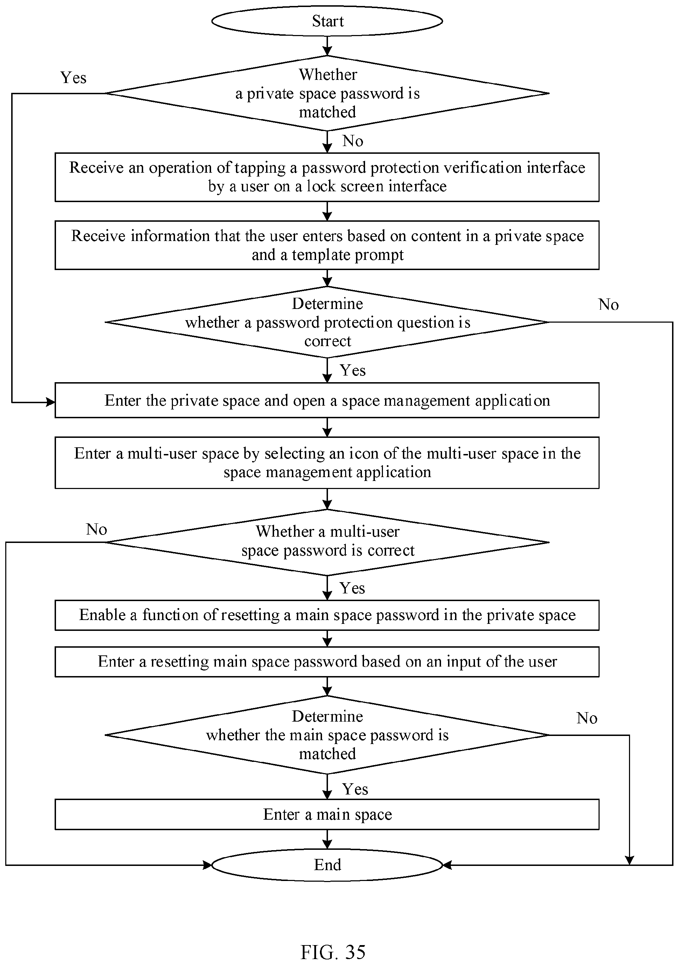

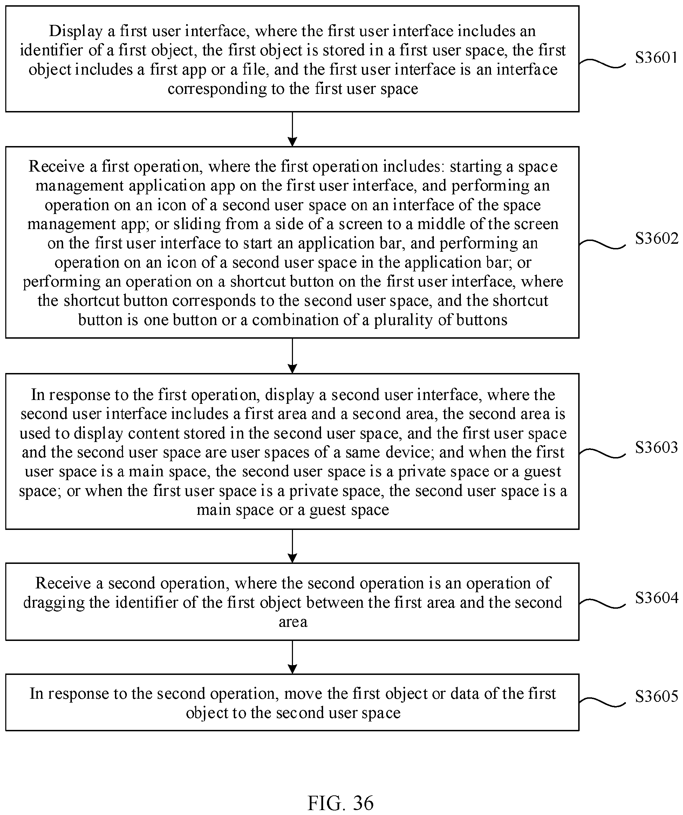

FIG. 35 is a flowchart of resetting a main space password according to an embodiment. As shown in FIG. 36, when a user enters a private space password to attempt to enter a private space, a terminal device checks whether the private space password is matched. If yes, the private space is entered; or if not, the user taps a password protection verification interface on a lock screen interface. The user enters information based on content stored in the private space in memories and based on a prompt of a password protection question template. The terminal device determines whether an input password security question is correct. If the input password protection question is incorrect, the process ends. If the input password protection question is correct, the terminal device enters the private space, opens a space management app, and opens a multi-user space by using a multi-user icon in the space management app. If a multi-user space password that is input is incorrect, the process ends. If the multi-user space password that is input is correct, a function of resetting the main space password is enabled in the private space. The user may reset the main space password by using the private space. The user enters a new main space password to enter the main space. If the main space password that is input is correct, the main space is normally started. If the password that is input is incorrect, the process ends. In this embodiment, the terminal device resets the main space password in a manner of combining the private space, the multi-user space, and the protection question of the private space password, thereby avoiding inconvenience caused by clearing the password through restoring factory settings, and making the password of the main space more convenient and quicker on the premise of ensuring data security.

FIG. 36 is a flowchart of cross-user space data sharing according to an embodiment, including the following steps.

S3601: Display a first user interface, where the first user interface includes an identifier of a first object, the first object is stored in a first user space, the first object includes a first app or a file, and the first user interface is an interface corresponding to the first user space.

The first user interface is, for example, the interface of the main space shown in FIG. 5, and the identifier of the first object is, for example, the icon of "Memo" shown in FIG. 5.

S3602: Receive a first operation, where the first operation includes: starting a space management application app on the first user interface, and performing an operation on an icon of a second user space on an interface of the space management app; or sliding from a side of a screen to a middle of the screen on the first user interface to start an application bar, and performing an operation on an icon of a second user space in the application bar; or performing an operation on a shortcut button on the first user interface, where the shortcut button corresponds to the second user space, and the shortcut button is one button or a combination of a plurality of buttons.

For the first operation, refer to the operation manners shown in FIG. 4, FIG. 5, and FIG. 6.

S3603: In response to the first operation, display a second user interface, where the second user interface includes a first area and a second area, the second area is used to display content stored in the second user space, and the first user space and the second user space are user spaces of a same device; and when the first user space is a main space, the second user space is a private space or a guest space, or when the first user space is a private space, the second user space is a main space or a guest space.

The second user interface is, for example, the interface shown in FIG. 7, FIG. 9, FIG. 11, FIG. 16, FIG. 18, FIG. 28, or FIG. 31. For example, in FIG. 7, the upper half displayed in the main space may be used as the first area, and the lower half displayed in the private space may be used as the second area; or the lower half displayed in the private space is used as the first area, and the upper half displayed in the main space is used as the second area.

S3604: Receive a second operation, where the second operation is an operation of dragging the identifier of the first object between the first area and the second area.

For example, the second operation is an operation on the icon of "App Mall" in FIG. 9, or may be an operation on the icon of "Memo" in FIG. 11, or an operation on the icon of "June attendance sheet" in FIG. 16, or an operation on the icon of the Wallet app in FIG. 28, or an operation on an icon of the video file in FIG. 31.

S3605: In response to the second operation, move the first object or data of the first object to the second user space. An installation resource of the first app may be sent to the second user space, so that the first app performs application twinning in the second user space; or data of the first app may be sent to a second app in the second user space, so that the second app obtains the data of the first app, for example, obtains authorization information of a payment app; or may send the file to the second user space for storage, to implement file sharing.

After the first object or the data of the first object is moved based on the second operation, the second user space may obtain the first object or the data of the first object, and may further display the first object on an interface of the second user space, for example, the icon of "App Mall" displayed on the interface of the main space in FIG. 10, and the icon of "Memo" displayed on the interface of the private space in FIG. 12, or the icon of "June attendance sheet" displayed on the interface of the main space in FIG. 17, or an icon of "Video" displayed on the interface of the main space in FIG. 19.

In the method, the user may input the first operation on the terminal device, and correspondingly display the interfaces of the first user space and the second user space in the first area and the second area respectively, to obtain the second user interface through split-screen display. Such split-screen display can avoid a user from repeatedly switching interfaces to compare differences between objects displayed in different spaces, so that the user can intuitively compare and observe the two spaces. Then, based on the second operation that is input by the user and that is for the identifier of the first object, the terminal device can send the first object or the data of the first object from the first user space to the second user space, thereby avoiding a cumbersome operation of repeatedly switching between different spatial interfaces to perform data sharing, and improving cross-space data sharing efficiency.

The foregoing describes in detail an example of the space management method provided in this application. It may be understood that to implement the foregoing functions, the corresponding apparatus includes corresponding hardware structures and/or software modules for performing the functions. A person skilled in the art should be easily aware that units and algorithm steps in the examples described with reference to the embodiments disclosed in this specification may be implemented in a form of hardware or in a form of a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, functional module division may be performed on a space management apparatus according to the foregoing method example. For example, function modules may be obtained through division based on functions, or two or more functions may be integrated into one module. The integrated module may be implemented in a form of hardware, or may be implemented in a form of a software functional module. It should be noted that, division of modules in this application is merely an example, and is only division of logical functions. During actual implementation, another division manner may be used.

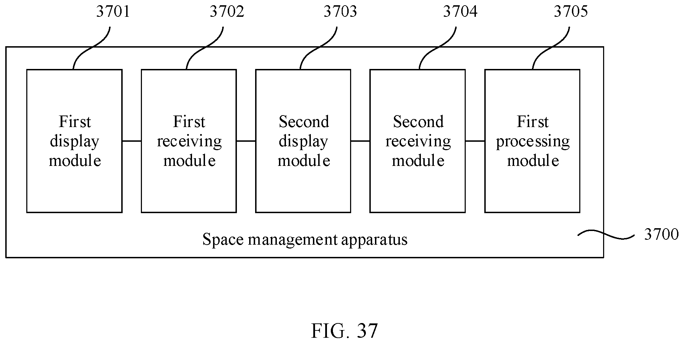

FIG. 37 is a schematic diagram of a structure of a space management apparatus according to this application. The apparatus 3700 includes a first display module 3701, a first receiving module 3702, a second display module 3703, a second receiving module 3704, and a first processing module 3705.

The first display module 3701 is configured to display a first user interface, where the first user interface includes an identifier of a first object, and the first object is stored in first user space.

The first receiving module 3702 is configured to receive a first operation.

The second display module 3703 is configured to: in response to the first operation, display a second user interface, where the second user interface includes a first area and a second area, the second area is used to display content stored in a second user space, the first user space and the second user space are user spaces of a same device, and the first area includes the identifier of the first object.

The second receiving module 3704 is configured to receive a second operation, where the second operation is an operation performed on the identifier of the first object.

The first processing module 3705 is configured to: in response to the second operation, move the first object or data of the first object to the second user space.

Optionally, the first operation includes:
starting a space management application app on the first user interface, and performing an operation on an icon of the second user space on an interface of the space management app; or
sliding from a side of a screen to a middle of the screen on the first user interface to start an application bar, and performing an operation on an icon of the second user space in the application bar; or
performing an operation on a shortcut button, where the shortcut button is one button or a combination of a plurality of buttons.

Optionally, the first object is a first application app, and the identifier of the first object is an icon of the first app; and the first processing module 3705 is specifically configured to: send an installation resource of the first app to the second user space, and install the first app in the second user space.

Optionally, the first object is a first application app, and the identifier of the first object is an icon of the first app; and the first processing module 3705 is specifically configured to send data of the first app to a second app in the second user space, to enable the second app to obtain the data of the first app.

Optionally, the first object is a file, and the identifier of the first object is an icon of the file; and the first processing module 3705 is specifically configured to send the file to the second user space for storage.

Optionally, when the first user space is a main space, the second user space is a private space or a guest space; or when the first user space is a private space, the second user space is a main space or a guest space.

Optionally, the first user space and the second user space are logged in with different passwords, and the apparatus 3700 further includes a security module. The security module is configured to: when login to the second user space succeeds, grant a user permission to reset the password of the first user space; or when login to the second user space fails, perform a security information check on the second user space, and when the security information check succeeds, grant a user permission to reset the password of the first user space, where security information includes information stored in the second user space.

Optionally, the apparatus 3700 further includes a second processing module. The second processing module is configured to: receive a third operation; in response to the third operation, display a third user interface, where the third user interface includes the first area and a third area, the third area includes content stored in a third user space, and the third user space and the first user space are user spaces of different devices; receive a fourth operation; and in response to the fourth operation, move the first object to the third user space, where the fourth operation is an operation of moving the identifier of the first object from the first area to the third area; or in response to the fourth operation, move a second object to the first user space, where the fourth operation is an operation of moving an identifier of the second object from the third area to the first area.

For a specific manner in which the apparatus 3700 performs a space management method and a generated beneficial effect, refer to related descriptions in the method embodiments.

An embodiment of this application further provides an electronic device, including the foregoing processor. The electronic device provided in this embodiment may be the terminal device 100 shown in FIG. 1, and is configured to perform the foregoing space management method. When an integrated unit is used, the terminal device may include a processing module, a storage module, and a communication module. The processing module may be configured to control and manage actions of the terminal device, for example, may be configured to support the terminal device in performing steps performed by a display unit, a detection unit, and a processing unit. The storage module may be configured to support the terminal device in storing program code, data, and the like. The communication module may be configured to support communication between the terminal device and another device.

The processing module may be a processor or a controller. The processing module may implement or execute various example logical blocks, modules, and circuits described with reference to content disclosed in this application. Alternatively, the processor may be a combination implementing a computing function, for example, a combination of one or more microprocessors, a combination of a digital signal processor (digital signal processor, DSP) and a microprocessor, or the like. The storage module may be a memory. The communication module may be specifically a device that interacts with another terminal device, for example, a radio frequency circuit, a Bluetooth chip, or a Wi-Fi chip.

In an embodiment, when the processing module is a processor, and the storage module is a memory, the terminal device in this embodiment may be a device having the structure shown in FIG. 1.

An embodiment of this application further provides a computer-readable storage medium. The computer-readable storage medium stores a computer program, and when the computer program is executed by a processor, the processor is enabled to perform the space management method in any one of the foregoing embodiments.

An embodiment of this application further provides a computer program product, and when the computer program product runs on a computer, the computer is enabled to perform the foregoing related steps, to implement the space management method in the foregoing embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

In the several embodiments provided in this application, it should be understood that the disclosed apparatus and method may be implemented in other manners. For example, the described apparatus embodiment is merely an example. For example, division into the module or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, which may be located in one place, or may be distributed on different places. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A space management method, comprising:
displaying a first user interface, wherein the first user interface comprises an identifier of a first object, and the first object is stored in a first user space;
receiving a first operation;
in response to the first operation, displaying a second user interface, wherein the second user interface comprises a first area and a second area, the second area is used to display content stored in a second user space, the first user space and the second user space are user spaces of a same device, and the first area comprises the identifier of the first object;
receiving a second operation, wherein the second operation is an operation performed on the identifier of the first object; and
in response to the second operation, moving the first object or data of the first object to the second user space.

2. The method according to claim 1, wherein the first operation comprises:
starting a space management application app on the first user interface, and performing an operation on an icon of the second user space on an interface of the space management app; or
sliding from a side of a screen to a middle of the screen on the first user interface to start an application bar, and performing an operation on an icon of the second user space in the application bar; or
performing an operation on a shortcut button, wherein the shortcut button is one button or a combination of a plurality of buttons.

3. The method according to claim 1, wherein the first object is a first application app, and the identifier of the first object is an icon of the first app; and
the moving the first object or data of the first object to the second user space comprises:
sending an installation resource of the first app to the second user space, and installing the first app in the second user space.

4. The method according to claim 1, wherein the first object is a first application app, and the identifier of the first object is an icon of the first app; and
the moving the first object or data of the first object to the second user space comprises:
sending data of the first app to a second app in the second user space, to enable the second app to obtain the data of the first app.

5. The method according to claim 1, wherein the first object is a file, and the identifier of the first object is an icon of the file; and
the moving the first object or data of the first object to the second user space comprises:
sending the file to the second user space for storage.

6. The method according to any one of claims 1 to 5, wherein when the first user space is a main space, the second user space is a private space or a guest space; or
when the first user space is a private space, the second user space is a main space or a guest space.

7. The method according to any one of claims 1 to 6, wherein the first user space and the second user space are logged in with different passwords, and the method further comprises:
when login to the second user space succeeds, granting a user permission to reset the password of the first user space; or
when login to the second user space fails, performing a security information check on the second user space, and when the security information check succeeds, granting a user permission to reset the password of the first user space, wherein security information comprises information stored in the second user space.

8. The method according to claim 1, wherein the method further comprises:
receiving a third operation;
in response to the third operation, displaying a third user interface, wherein the third user interface comprises the first area and a third area, the third area comprises content stored in a third user space, and the third user space and the first user space are user spaces of different devices;
receiving a fourth operation; and
in response to the fourth operation, moving the first object to the third user space, wherein the fourth operation is an operation of moving the identifier of the first object from the first area to the third area; or
in response to the fourth operation, moving a second object to the first user space, wherein the fourth operation is an operation of moving an identifier of the second object from the third area to the first area.

9. An electronic device, comprising: a processor, a memory, and an interface, wherein the processor, the memory, and the interface cooperate with each other, and the processor is configured to perform the method according to any one of claims 1 to 8.

10. A computer-readable storage medium, wherein the computer-readable storage medium stores a computer program, and when the computer program is executed by a processor, the processor is enabled to perform the method according to any one of claims 1 to 8.
